# EUROPEAN PATENT APPLICATION

(11) **EP 3 757 150 A1**
(43) Date of publication of application: **30.12.2020**
(21) Application number: 19757399.1
(22) Date of filing: 22.02.2019
(51) Int. Cl.: C08G 64/02, C08G 64/16

(54) **POLYCARBONATE RESIN AND METHOD FOR MANUFACTURING SAME**

(30) Priority: 23.02.2018 JP 2018030563; 07.08.2018 JP 2018148514
(71) Applicant: Teijin Limited, Osaka 530-0005 (JP)
(72) Inventor: TSUNEMORI, Hideyuki, Osaka-shi, Osaka 530-0005 (JP); IMAZATO, Kenta, Osaka-shi, Osaka 530-0005 (JP); FURUNO, Takeshi, Osaka-shi, Osaka 530-0005 (JP); YAMANAKA, Katsuhiro, Osaka-shi, Osaka 530-0005 (JP)
(74) Representative: Beckmann, Claus
(86) International application number: PCT/JP2019/006883
(87) International publication number: WO 2019/163964

(57) **Abstract**

Provided is a novel polycarbonate resin that has superior heat resistance and mechanical strength, and that is resistant to staining when being polymerized and molded, thus having superior transparency and hue. Provided is a polycarbonate resin characterized by containing a structural unit originating from a dihydroxy compound represented by formula (1) in which the boric-acid content is equal to or less than 100 ppm by weight and/or the tertiary-amine content is equal to or less than 1000 ppm by weight, and by additionally having a terminal phenyl group originating from a diester carbonate represented by formula (2), wherein the concentration of the terminal phenyl group is equal to or greater than 30 µeq/g. (In formula (1), R₁, R₂, R₃, and R₄ respectively indicate, independently of each other, a hydrogen atom, an alkyl group having 1 to 10 carbon atoms, an alkoxy group having 1 to 10 carbon atoms, a cycloalkyl group having 3 to 20 carbon atoms, a cycloalkoxy group having 6 to 20 carbon atoms, an aryl group having 6 to 10 carbon atoms, an aralkyl group having 7 to 20 carbon atoms, an aryloxy group having 6 to 10 carbon atoms, an aralkyloxy group having 7 to 20 carbon atoms, or a halogen atom. Cyclobutane ring indicates any one of a cis-trans isomer mixture, a cis isomer alone, and a trans isomer alone.) (In formula (2), R₅ and R₆ respectively are, independently of each other, a substituted or non-substituted aromatic group.)

## Description

### FIELD

The present invention relates to a polycarbonate resin with excellent weather resistance, heat resistance, transparency, color tone and mechanical strength, and to its molded articles and production process.

### BACKGROUND

Polycarbonate resins (hereunder, "PC") have excellent transparency, impact resistance, heat resistance and dimensional stability, and are therefore used as engineering plastics in a very wide range of fields including electrical and electronic purposes, automobile purposes, building materials, furniture, musical instruments and miscellaneous goods. Because of their high shaping freedom and ability to integrate with multiple parts unlike inorganic glass, they are also considered promising for aiding in greater designability and weight reduction of car bodies and increased productivity.

Conventional PC, however, has low color tone or transparency for sunlight rays and also low mechanical strength when exposed to outdoor environments for prolonged periods, and its uses for outdoor purposes have therefore been limited.

Methods of adding ultraviolet absorbers to PC to overcome this problem are known. While improvement in color tone under ultraviolet irradiation may be achieved by adding an ultraviolet absorber, it can also lead to reduced color tone or lower heat resistance and transparency of the resin itself, while the ultraviolet absorber may also volatilize during molding and contaminate the die, or outer appearance defects may form in the molded articles.

Highly weather-resistant polycarbonate resins have therefore been proposed which are obtained from a starting material that is an aliphatic dihydroxy compound or alicyclic dihydroxy compound without a benzene ring structure in the molecular skeleton, or an oxygen-containing alicyclic dihydroxy compound having an ether bond in the molecule, typically an isosorbide (PTLs 1 to 6, for example). Such polycarbonate resins are usually produced by methods such as transesterification or melt polymerization, wherein the dihydroxy compound is transesterified with a carbonic acid diester such as a diphenyl carbonate in the presence of a basic catalyst, at a high temperature of 200°C or higher, and polymerization is conducted while removing the phenol by-product out of the system, to obtain a polycarbonate resin. However, polycarbonate resins obtained using monomers without phenolic hydroxyl groups suffer impaired color tone during polymerization or during molding, when they are exposed to high temperature, compared to polycarbonate resins obtained using monomers with phenolic hydroxyl groups, such as bisphenol A, and this has resulted in the problem of even poorer color tone under ultraviolet rays or visible light rays.

Therefore, polycarbonate resins with excellent weather resistance, heat resistance, transparency, color tone and mechanical strength still do not exist.

Incidentally, polycarbonate copolymers using 2,2,4,4-tetramethyl-1,3-cyclobutanediol (hereunder, "TMCBD") as monomer are known in the prior art (PTLs 7 to 10 and NPL 1). A method for producing TMCBD is described in PTL 11, and a method for producing starting materials for TMCBD is described in NPL 2.

### [CITATION LIST]

### [PATENT LITERATURE]

[PTL 1] Japanese Unexamined Patent Publication No. 2012-214665
[PTL 2] Japanese Unexamined Patent Publication No. 2012-214675
[PTL 3] Japanese Unexamined Patent Publication HEI No. 2-86618
[PTL 4] Japanese Examined Patent Publication SHO No. 38-26798
[PTL 5] Japanese Examined Patent Publication SHO No. 39-1546
[PTL 6] Japanese Unexamined Patent Publication No. 2015-78257
[PTL 7] Japanese Unexamined Patent Publication SHO No. 63-92644
[PTL 8] Japanese Unexamined Patent Publication HEI No. 2-222416
[PTL 9] Japanese Unexamined Patent Publication HEI No. 11-240945
[PTL 10] Japanese Unexamined Patent Publication No. 2015-137355
[PTL 11] Japanese Patent Public Inspection HEI No. 8-506341

### [NON-PATENT LITERATURE]

[NPL 1] Carey Cecil Geiger, Jack D. Davies, William H. Daly, Aliphatic-Aromatic Copolycarbonates Derived from 2,2,4,4-Tetramethyl-1,3-cyclobutanediol, Journal of Polymer Science: Part A: Polymer Chemistry, 1995, Vol.33, 2317-2327
[NPL 2] Bulletin of the Faculty of Engineering, Hokkaido University, 67:155-163(1973)

### SUMMARY

### [TECHNICAL PROBLEM]

It is an object of this invention to provide a novel polycarbonate resin that has excellent heat resistance and mechanical strength, that is resistant to coloration during polymerization and molding, that has excellent transparency and color tone, and that has satisfactory weather resistance.

### [SOLUTION TO PROBLEM]

As a result of much ardent research with the aim of achieving the object stated above, the present inventors have completed this invention upon finding that a polycarbonate resin that includes a structural unit derived from a dihydroxy compound without a benzene ring structure but with a cyclobutane ring such as 2,2,4,4-tetramethyl-1,3-cyclobutanediol (hereunder, "TMCB"), with impurities limited to below a specified amount, has excellent heat resistance and mechanical strength, resistance to coloration during polymerization and molding, excellent transparency and color tone, and also satisfactory weather resistance.

Specifically, the present invention provides the following Construction 1 to Construction 15.

### (Construction 1)

A polycarbonate resin that includes a structural unit derived from a dihydroxy compound represented by the following formula (1), having a boric acid content of 100 ppm by weight or lower and/or a tertiary amine content of 1000 ppm by weight or lower, and that also has a terminal phenyl group derived from a carbonic acid diester represented by the following formula (2), wherein the terminal phenyl group concentration is 30 µeq/g or greater. 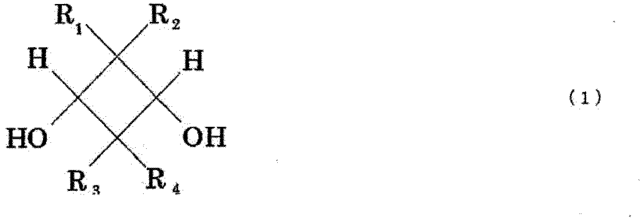 wherein R₁, R₂, R₃ and R₄ each independently represent a hydrogen atom, an alkyl group of 1 to 10 carbon atoms, an alkoxy group of 1 to 10 carbon atoms, a cycloalkyl group of 3 to 20 carbon atoms, a cycloalkoxy group of 6 to 20 carbon atoms, an aryl group of 6 to 10 carbon atoms, an aralkyl group of 7 to 20 carbon atoms, an aryloxy group of 6 to 10 carbon atoms, an aralkyloxy group of 7 to 20 carbon atoms or a halogen atom, the cyclobutane ring represents a *cis*/*trans* isomer mixture, a *cis* isomer alone or a *trans* isomer alone. 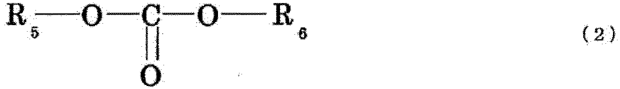 wherein R₅ and R₆ each independently represent a substituted or unsubstituted aromatic group.

### (Construction 2)

The polycarbonate resin according to Construction 1, wherein the dihydroxy compound represented by formula (1) is composed of a *cis*/*trans* isomer mixture.

### (Construction 3)

The polycarbonate resin according to Construction 1 or 2, wherein the dihydroxy compound represented by formula (1) is composed of a *cis*/*trans* isomer mixture, and the *cis* isomer ratio is 30 to 90%.

### (Construction 4)

The polycarbonate resin according to any one of Constructions 1 to 3, wherein the boric acid content of the dihydroxy compound represented by formula (1) is 0.1 ppm by weight to 80 ppm by weight.

### (Construction 5)

The polycarbonate resin according to any one of Constructions 1 to 4, wherein the tertiary amine content of the dihydroxy compound represented by formula (1) is 0.1 ppm by weight to 500 ppm by weight.

### (Construction 6)

The polycarbonate resin according to Construction 5, wherein the tertiary amine is triethylamine.

### (Construction 7)

The polycarbonate resin according to any one of Constructions 1 to 6, wherein the dihydroxy compound represented by formula (1) is 2,2,4,4-tetramethyl-1,3-cyclobutanediol.

### (Construction 8)

The polycarbonate resin according to any one of Constructions 1 to 7, which includes a structural unit derived from at least one compound selected from the group consisting of aliphatic dihydroxy compounds, alicyclic dihydroxy compounds and aromatic dihydroxy compounds.

### (Construction 9)

The polycarbonate resin according to Construction 8, wherein the molar ratio (A/B) of the structural unit (A) derived from the dihydroxy compound represented by formula (1) and the structural unit (B) derived from at least one compound selected from the group consisting of aliphatic dihydroxy compounds, alicyclic dihydroxy compounds and aromatic dihydroxy compounds is 10/90 to 90/10.

### (Construction 10)

The polycarbonate resin according to Construction 8 or 9, wherein the aliphatic dihydroxy compound is at least one compound selected from the group consisting of compounds of the following formula (3).

HO-⁅Cₘ H₂ₘ⁆-OH (3)

wherein m represents an integer of 2 to 12.

### (Construction 11)

The polycarbonate resin according to Construction 8 or 9, wherein the alicyclic dihydroxy compound is at least one compound selected from the group consisting of cyclohexanedimethanol, tricyclodecanedimethanol, adamantanediol, pentacyclopentadecanedimethanol, 3,9-bis(2-hydroxy-1,1-dimethylethyl)-2,4,8,10-tetraoxaspiro[5.5]undecane and isosorbide.

### (Construction 12)

The polycarbonate resin according to Construction 8 or 9, wherein the aromatic dihydroxy compound is at least one compound selected from the group consisting of compounds of the following formula (4). 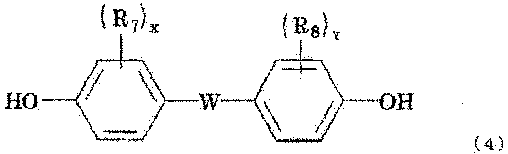 wherein W represents at least one divalent organic residue selected from the group consisting of the following formulas (5) to (8), a single bond or any bonding group of the following formula (9), X and Y each independently represent 0 or an integer of 1 to 4, and R₇ and R₈ each independently represent a halogen atom or an organic residue selected from the group consisting of alkyl groups of 1 to 10 carbon atoms, alkoxy groups of 1 to 10 carbon atoms, cycloalkyl groups of 6 to 20 carbon atoms, cycloalkoxy groups of 6 to 20 carbon atoms, aryl groups of 6 to 10 carbon atoms, aralkyl groups of 7 to 20 carbon atoms, aryloxy groups of 6 to 10 carbon atoms and aralkyloxy groups of 7 to 20 carbon atoms. 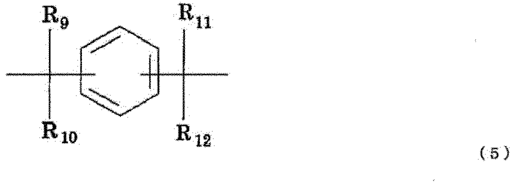 wherein R₉, R₁₀, R₁₁ and R₁₂ each independently represent a hydrogen atom, a halogen atom or an alkyl group of 1 to 3 carbon atoms. 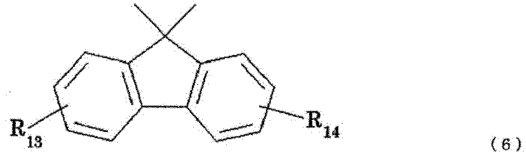 wherein R₁₃ and R₁₄ each independently represent a hydrogen atom, a halogen atom or an alkyl group of 1 to 3 carbon atoms. 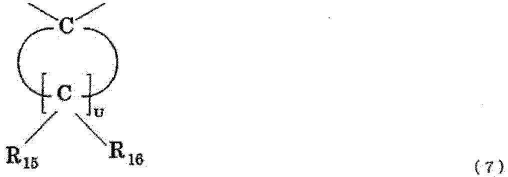 wherein U represents an integer of 4 to 11, and the multiple R₁₅ and R₁₆ groups are each independently a hydrogen atom, a halogen atom, or a group selected from among alkyl groups of 1 to 3 carbon atoms. 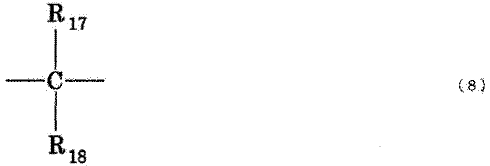 wherein R₁₇ and R₁₈ each independently represent a hydrogen atom, a halogen atom, or a group selected from among hydrocarbon groups of 1 to 10 carbon atoms.

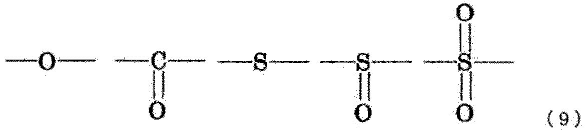

### (Construction 13)

The polycarbonate resin according to any one of Constructions 1 to 12, wherein the aromatic monohydroxy compound content is 1500 ppm by weight or lower.

### (Construction 14)

A polycarbonate resin molded article obtained by molding a polycarbonate resin according to any one of Constructions 1 to 13.

### (Construction 15)

A method for producing a polycarbonate resin according to Construction 1, wherein a dihydroxy compound represented by formula (1) having a boric acid content of 100 ppm by weight or lower and/or a tertiary amine content of 1000 ppm by weight or lower, and a carbonic acid diester represented by formula (2), are subjected to transesterification reaction in the presence of an alkali metal catalyst and/or an alkaline earth metal catalyst.

### [ADVANTAGEOUS EFFECTS OF INVENTION]

The polycarbonate resin of the invention has excellent heat resistance and mechanical strength, as well as resistant to coloration during polymerization or molding and satisfactory weather resistance, and it can therefore be suitably used as a member for outdoor usage purposes. The industrial effect exhibited by the invention is an exceptional effect.

### DESCRIPTION OF EMBODIMENTS

The present invention will now be explained in detail, with the understanding that the following explanation of the constituent features deals only with representative examples of embodiments of the invention and is not meant to limit the content thereof, so long as the gist of the invention is maintained.

### <Polycarbonate resin>

The polycarbonate resin of the invention is a polycarbonate resin that includes a structural unit derived from a dihydroxy compound represented by the following formula (1), having a boric acid content of 100 ppm by weight or lower and/or a tertiary amine content of 1000 ppm by weight or lower, and that also has a terminal phenyl group derived from a carbonic acid diester represented by the following formula (2), wherein the terminal phenyl group concentration is 30 µeq/g or greater. 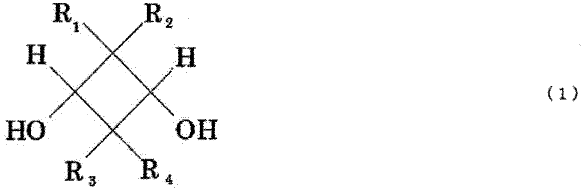 wherein R₁, R₂, R₃ and R₄ each independently represent a hydrogen atom, an alkyl group of 1 to 10 carbon atoms, an alkoxy group of 1 to 10 carbon atoms, a cycloalkyl group of 3 to 20 carbon atoms, a cycloalkoxy group of 6 to 20 carbon atoms, an aryl group of 6 to 10 carbon atoms, an aralkyl group of 7 to 20 carbon atoms, an aryloxy group of 6 to 10 carbon atoms, an aralkyloxy group of 7 to 20 carbon atoms or a halogen atom, the cyclobutane ring represents a *cis*/*trans* isomer mixture, a *cis* isomer alone or a *trans* isomer alone. 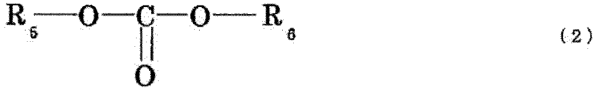 wherein R₅ and R₆ each independently represent a substituted or unsubstituted aromatic group.

The polycarbonate resin of the invention will now be described in detail.

### <Dihydroxy compound containing cyclobutane ring>

In formula (1), R₁, R₂, R₃ and R₄ each independently represent a hydrogen atom, an alkyl group of 1 to 10 carbon atoms, an alkoxy group of 1 to 10 carbon atoms, a cycloalkyl group of 3 to 20 carbon atoms, a cycloalkoxy group of 6 to 20 carbon atoms, an aryl group of 6 to 10 carbon atoms, an aralkyl group of 7 to 20 carbon atoms, an aryloxy group of 6 to 10 carbon atoms, an aralkyloxy group of 7 to 20 carbon atoms or a halogen atom. Preferably, R₁, R₂, R₃ and R₄ in the formula are each independently a hydrogen atom, an alkyl group of 1 to 6 carbon atoms, a cycloalkyl group of 3 to 6 carbon atoms or an aryl group of 6 to 10 carbon atoms, with methyl being more preferred.

The dihydroxy compound represented by formula (1) may be 2-methyl-1,3-cyclobutanediol, 2,4-dimethyl-1,3-cyclobutanediol, 2,2,4,4-tetramethyl-1,3-cyclobutanediol,2-ethyl-1,3-cyclobutanediol, 2,4-diethyl-1,3-cyclobutanediol, 2,2,4,4-tetraethyl-1,3-cyclobutanediol, 2-butyl-1,3-cyclobutanediol, 2,4-dibutyl-1,3-cyclobutanediol or 2,2,4,4-tetrabutyl-1,3-cyclobutanediol. The most preferred dihydroxy compound is 2,2,4,4-tetramethyl-1,3-cyclobutanediol. The above dihydroxy compounds may also be used in combinations of two or more.

The dihydroxy compound represented by formula (1) is preferably a *cis*/*trans* isomer mixture. There is no restriction on the ratio, but the lower limit for the *cis* isomer ratio is preferably 30% or higher, more preferably 45% or higher and even more preferably 50% or higher. The upper limit for the *cis* isomer ratio is preferably no higher than 90%, more preferably no higher than 85% and even more preferably no higher than 80%. If the *cis* isomer is below the lower limit, the melting point of the polymerized polymer will be higher, requiring a higher molding temperature, and this can cause decomposition of the resin and reduce the mechanical strength of molded articles. The *cis*/*trans* isomer ratio can be calculated by measuring the ¹H-NMR spectrum using a JNM-AL400 by JEOL Corp.

The dihydroxy compound represented by formula (1) may be obtained by addition of a ketene represented by the following formula (10), or dimerization to form a diketene, and then hydrogenation to synthesize a diol that contains a cyclobutane ring. 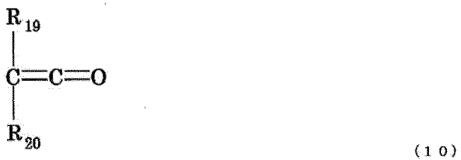 wherein R₁₉ and R₂₀ each independently represent a hydrogen atom, an alkyl group of 1 to 10 carbon atoms, an alkoxy group of 1 to 10 carbon atoms, a cycloalkyl group of 3 to 20 carbon atoms, a cycloalkoxy group of 6 to 20 carbon atoms, an aryl group of 6 to 10 carbon atoms, an aralkyl group of 7 to 20 carbon atoms, an aryloxy group of 6 to 10 carbon atoms, an aralkyloxy group of 7 to 20 carbon atoms or a halogen atom.

A example of synthesizing 2,2,4,4-tetramethyl-1,3-cyclobutanediol, to be preferably used for the invention, is shown below as Synthesis Example (I).

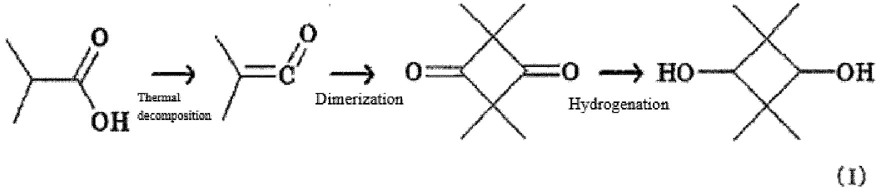

Synthesis Example (I) is a method of adding a dimethyl ketene produced by thermal decomposition using isobutyric acid as the starting substance, or conducting dimerization reaction, followed by hydrogenation. Using isobutyric acid as the starting material is industrially advantageous, and it is described in detail in PTL 11 mentioned above. Other methods of producing dimethyl ketenes include a method by decarboxylation of dimethylmalonic anhydride, a method of thermal decomposition of N-isobutyrylphthalimide, a method of thermal decomposition of α-carbomethoxy-α,β-dimethyl-β-butyrolactone, and a method of thermal decomposition of a dimethyl ketene dimer.

As a method of dimethyl ketene addition or addition of hydrogen to a cyclic diketone after dimerization reaction, it is common to employ a method of using a metal hydride, or a method of allowing hydrogen gas to act in the presence of a metal catalyst. The method of using a metal hydride may be a method using an aluminum-based reducing agent such as lithium aluminum hydride, or a method of using a boron-based reducing agent such as sodium borohydride. For industrial use, a boron-based reducing agent is suitable in terms of compound stability and handleability, with sodium borohydride being most commonly used as the reducing agent. Characteristically, boric acid is formed as a by-product in hydrogenation reaction that uses a boron-based reducing agent.

The present inventors have found that when a dihydroxy compound represented by formula (1) obtained by such a production method is used as a monomer in a polycarbonate resin, the residual boric acid in the dihydroxy compound adversely affects the color tone and transparency of the resin.

According to the invention, the boric acid content in the dihydroxy compound represented by formula (1) is 100 ppm by weight or lower, preferably 80 ppm by weight or lower, more preferably 50 ppm by weight or lower and even more preferably 20 ppm by weight or lower. The boric acid content may also be 0.1 ppm by weight or higher, 1.0 ppm by weight or higher, 5 ppm by weight or higher or 10 ppm by weight or higher. For example, the boric acid content in the dihydroxy compound represented by formula (1) used for the invention may be 0.1 ppm by weight to 100 ppm by weight, or 5 ppm by weight to 100 ppm by weight. It is not preferred for the boric acid content to be above this limit, because coloration of the polycarbonate resin will occur during melt polymerization and the color tone and transparency of molded articles will be impaired. The boric acid content in the dihydroxy compound can be quantified using gas chromatography/mass spectrometry, by derivatization using a silylating agent. According to the invention, the dihydroxy compound represented by formula (1) is one obtained using a boron-based reducing agent during production of the dihydroxy compound.

A research report by Hokkaido University (NPL 1) describes adding different phosphorus compounds, of which triethyl phosphate is typical, as catalysts in production of a ketene by thermal decomposition as described in Synthesis Example (I) above, while adding a small amount of a tertiary amine compound to increase the yield.

The present inventors have found that when a dihydroxy compound represented by formula (1) obtained by such a production method is used as a monomer in a polycarbonate resin, the residual tertiary amine in the dihydroxy compound adversely affects the color tone and transparency of the resin.

Therefore, the amount of tertiary amine in the dihydroxy compound represented by formula (1) is preferably 1000 ppm by weight or lower, more preferably 500 ppm by weight or lower and even more preferably 100 ppm by weight or lower. The amount of tertiary amine may also be 0.1 ppm by weight or higher, 1.0 ppm by weight or higher, 10 ppm by weight or higher or 100 ppm by weight or higher. For example, the tertiary amine content in the dihydroxy compound represented by formula (1) used for the invention may be 0.1 ppm by weight to 1000 ppm by weight, or 5 ppm by weight to 1000 ppm by weight. Specific examples of tertiary amines include trimethylamine, triethylamine, tributylamine, tripropylamine, trihexylamine, tridecylamine, N,N-dimethylcyclohexylamine, pyridine, quinoline and dimethylaniline. Triethylamine is most preferably used as the tertiary amine from an industrial standpoint as well. The tertiary amine content in the dihydroxy compound can be quantified using a cation exchange column and electric conductivity detector in ion chromatography. According to the invention, the dihydroxy compound represented by formula (1) is one obtained using a tertiary amine during production of the dihydroxy compound.

For example, the boric acid content in the dihydroxy compound represented by formula (1) used for the invention may be 0.1 ppm by weight to 100 ppm by weight or 5 ppm by weight to 100 ppm by weight, and the tertiary amine content may be 0.1 ppm by weight to 1000 ppm by weight or 5 ppm by weight to 1000 ppm by weight.

### <Other dihydroxy compounds>

The polycarbonate resin of the invention may also be a copolymer including a structural unit other than a dihydroxy compound represented by formula (1). Other dihydroxy compounds for deriving copolymer structural units may be aliphatic dihydroxy compounds, alicyclic dihydroxy compounds or aromatic dihydroxy compounds, which include dihydroxy compounds that have the diol compounds described in International Patent Publication No. WO2004/111106 and International Patent Publication No. WO2011/021720, or oxyalkylene glycols such as diethylene glycol, triethylene glycol, tetraethylene glycol and polyethylene glycol.

An aliphatic dihydroxy compound that is used is preferably a dihydroxy compound represented by the following formula (3).

**HO-⁅CₘH₂ₘ⁆-OH** (3)

wherein m represents an integer of 2 to 12.

Specific examples of aliphatic dihydroxy compounds include 1,3-propanediol, 1,4-butanediol, 1,5-pentanediol, 1,6-hexanediol, 1,8-octanediol, 1,9-nonanediol, 1,10-decanediol, 1,12-dodecanediol, 2-methyl-1,3-propanediol, neopentyl glycol, 3-methyl-1,5-pentanediol, *2-n-*butyl-2-ethyl-1,3-propanediol, 2,2-diethyl-1,3-propanediol, 2,4-diethyl-1,5-pentanediol, 1,2-hexaneglycol, 1,2-octyl glycol, 2-ethyl-1,3-hexanediol, 2,3-diisobutyl-1,3-propanediol, 2,2-diisoamyl-1,3-propanediol and 2-methyl-2-propyl-1,3-propanediol. The above dihydroxy compounds may also be used in combinations of two or more.

Alicyclic diol compounds include cyclohexanedimethanol, tricyclodecanedimethanol, adamantanediol, pentacyclopentadecanedimethanol, 3,9-bis(2-hydroxy-1,1 -dimethylethyl)-2,4,8,10-tetraoxaspiro[5.5]undecane and isosorbide. These dihydric phenols may also be used in combinations of two or more.

Examples of oxyalkylene glycols include diethylene glycol, triethylene glycol, tetraethylene glycol and polyethylene glycol. These compounds may be used alone, or two or more may be used in combination.

An aromatic dihydroxy compound that is used may be a dihydroxy compound represented by the following formula (4). 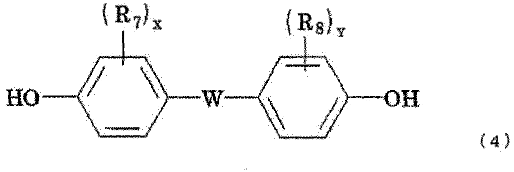 wherein W represents at least one divalent organic residue selected from the group consisting of the following formulas (5) to (8), a single bond or any bonding group of the following formula (9), X and Y each independently represent 0 or an integer of 1 to 4, and R₇ and R₈ each independently represent a halogen atom or an organic residue selected from the group consisting of alkyl groups of 1 to 10 carbon atoms, alkoxy groups of 1 to 10 carbon atoms, cycloalkyl groups of 6 to 20 carbon atoms, cycloalkoxy groups of 6 to 20 carbon atoms, aryl groups of 6 to 10 carbon atoms, aralkyl groups of 7 to 20 carbon atoms, aryloxy groups of 6 to 10 carbon atoms and aralkyloxy groups of 7 to 20 carbon atoms. 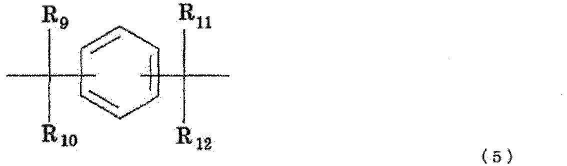 wherein R₉, R₁₀, R₁₁ and R₁₂ each independently represent a hydrogen atom, a halogen atom or an alkyl group of 1 to 3 carbon atoms. 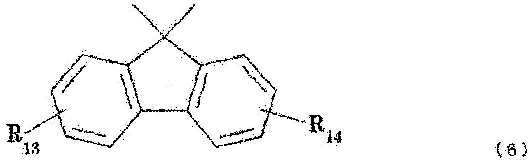 wherein R₁₃ and R₁₄ each independently represent a hydrogen atom, a halogen atom or an alkyl group of 1 to 3 carbon atoms. 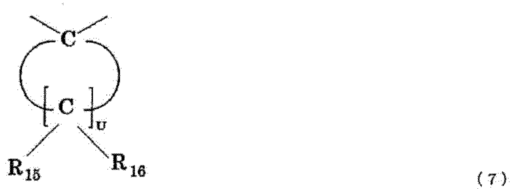 wherein U represents an integer of 4 to 11, and the multiple R₁₅ and R₁₆ groups are each independently a hydrogen atom, a halogen atom, or a group selected from among alkyl groups of 1 to 3 carbon atoms. 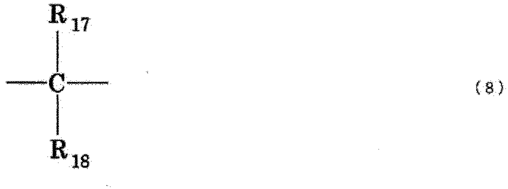 wherein R₁₇ and R₁₈ each independently represent a hydrogen atom, a halogen atom, or a group selected from among hydrocarbon groups of 1 to 10 carbon atoms.

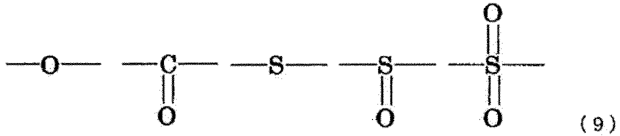

Specific examples of dihydroxy compounds for deriving a structural unit of formula (4) wherein W is a single bond include 4,4'-biphenol and 4,4'-bis(2,6-dimethyl)diphenol.

Specific examples of dihydroxy compounds for deriving a structural unit wherein W is a compound of formula (5) include α,α'-bis(4-hydroxyphenyl)-*o*-diisopropylbenzene, α,α'-bis(4-hydroxyphenyl)-*m*-diisopropylbenzene (usually referred to as "bisphenol M") and α,α'-bis(4-hydroxyphenyl)-*p*-diisopropylbenzene.

Specific examples of dihydroxy compounds for deriving a structural unit wherein W is a compound of formula (6) include 9,9-bis(4-hydroxyphenyl)fluorene and 9,9-bis(4-hydroxy-3-methylphenyl)fluorene.

Specific examples of dihydroxy compounds for deriving a structural unit wherein W is a compound of formula (7) include 1,1-bis(4-hydroxyphenyl)cyclohexane, 1,1-bis(4-hydroxyphenyl)-3,3,5-trimethylcyclohexane, 1,1-bis(4-hydroxy-3-methylphenyl)cyclohexane, 1,1 -bis(4-hydroxyphenyl)-4-isopropylcyclohexane and 1,1 -bis(3-cyclohexyl-4-hydroxyphenyl)cyclohexane-1,1-bis(3-methyl-4-hydroxyphenyl)-3,3,5-trimethylcyclohexane.

Specific examples of dihydroxy compounds for deriving a structural unit wherein W is a compound of formula (8) include 1,1-bis(4-hydroxyphenyl)methane, 2,4'-dihydroxydiphenylmethane, bis(2-hydroxyphenyl)methane, bis(4-hydroxyphenyl)methane, bis(4-hydroxy-2,6-dimethyl-3-methoxyphenyl)methane, bis(4-hydroxyphenyl)cyclohexylmethane, bis(4-hydroxyphenyl)diphenylmethane, 1,1-bis(4-hydroxyphenyl)ethane, 1,1-bis(4-hydroxy-2-phenyl)-1-phenylethane, 1,1-bis(4-hydroxy-2-chlorophenyl)ethane, 2,2-bis(4-hydroxyphenyl)propane (usually referred to as "bisphenol A"), 2,2-bis(4-hydroxy-3-methylphenyl)propane (usually referred to as "bisphenol C"), 2,2-bis(3-phenyl-4-hydroxyphenyl)propane, 2,2-bis(4-hydroxy-3-ethylphenyl)propane, 2,2-bis(4-hydroxy-3-isopropylphenyl)propane, 2,2-bis(3-*t*-butyl-4-hydroxyphenyl)propane, 2,2-bis(3-bromo-4-hydroxyphenyl)propane, 2,2-bis(3,5-dibromo-4-hydroxyphenyl)propane, 2,2-bis(4-hydroxyphenyl)-1,1,1,3,3,3-hexafluoropropane, 2,2-bis(4-hydroxyphenyl)-1-phenylpropane, 2,2-bis(4-hydroxyphenyl)butane, 2,2-bis(4-hydroxyphenyl)pentane, 4,4-bis(4-hydroxyphenyl)heptane, 2,2-bis(4-hydroxyphenyl)octane, 1,1-bis(4-hydroxyphenyl)decane, 1,1-bis(3-methyl-4-hydroxyphenyl)decane and 1,1-bis(2,3-dimethyl-4-hydroxyphenyl)decane.

Preferred among these dihydric phenols are bisphenol M for formula (5), 9,9-bis(4-hydroxy-3-methylphenyl)fluorene for formula (6), 1,1-bis(4-hydroxyphenyl)cyclohexane,1,1-bis(4-hydroxy-3-methylphenyl)cyclohexane and 1,1-bis(4-hydroxyphenyl)-3,3,5-trimethylcyclohexane for formula (7), 3,3'-dimethyl-4,4'-dihydroxydiphenyl sulfide for formula (8) and bisphenol A, bisphenol C and 1,1-bis(4-hydroxyphenyl)decane for formula (9).

Specific examples of dihydroxy compounds for deriving a structural unit where W is any compound of formula (9) include 4,4'-dihydroxydiphenyl ether, 4,4'-dihydroxy-3,3'-dimethyldiphenyl ether, 4,4'-dihydroxydiphenylsulfone, 2,4'-dihydroxydiphenylsulfone, 4,4'-dihydroxydiphenyl sulfoxide, 4,4'-dihydroxydiphenyl sulfide, 3,3'-dimethyl-4,4'-dihydroxydiphenyl sulfide and bis(3,5-dimethyl-4-hydroxyphenyl)sulfone.

Preferred examples of dihydric phenols derived from a structural unit other than formula (4) include 2,6-dihydroxynaphthalene, hydroquinone, resorcinol, resorcinol substituted with an alkyl group of 1 to 3 carbon atoms, 3-(4-hydroxyphenyl)-1,1,3-trimethylindan-5-ol, 1-(4-hydroxyphenyl)-1,3,3-trimethylindan-5-ol, 6,6'-dihydroxy-3,3,3',3'-tetramethylspiroindane, 1-methyl-1,3-bis(4-hydroxyphenyl)-3-isopropylcyclohexane, 1-methyl-2-(4-hydroxyphenyl)-3-[1-(4-hydroxyphenyl)isopropyl]cyclohexane, 1,6-bis(4-hydroxyphenyl)-1,6-hexanedione and ethyleneglycol bis(4-hydroxyphenyl)ether.

Other details regarding such polycarbonates are described in WO03/080728, Japanese Unexamined Patent Publication HEI No. 6-172508, Japanese Unexamined Patent Publication HEI No. 8-27370, Japanese Unexamined Patent Publication No. 2001-55435 and Japanese Unexamined Patent Publication No. 2002-117580, for example. These compounds are merely examples of dihydroxy compounds that can be used as structural units for the polycarbonate copolymer according to the invention, and they are not limitative.

### (Composition)

The polycarbonate resin of the invention preferably has a molar ratio (A/B) of 10/90 to 90/10, more preferably 20/80 to 85/15 and even more preferably 30/70 to 80/20, between the structural unit (A) derived from the dihydroxy compound represented by formula (1) and the structural unit (B) derived from at least one compound selected from the group consisting of aliphatic dihydroxy compounds, alicyclic dihydroxy compounds and aromatic dihydroxy compounds. The weather resistance will be satisfactory if unit (A) is present at this lower limit or greater, and the heat resistance will be excellent if it is present at the upper limit or lower. The molar ratio (A/B) of the copolymerization composition can be measured by ¹H-NMR, using a JNM-AL400 by JEOL Corp.

The polycarbonate resin of the invention has a terminal phenyl group derived from a carbonic acid diester represented by formula (2), having a terminal phenyl group concentration of 30 µeq/g or greater, preferably 40 µeq/g or greater and most preferably 50 µeq/g or greater, with an upper limit of preferably 160 µeq/g or lower, more preferably 140 µeq/g or lower and even more preferably 100 µeq/g or lower.

If the terminal phenyl group concentration is too high, the color tone after ultraviolet ray exposure may be impaired even if the color tone is satisfactory immediately after polymerization or during molding. If it is too low, the thermal stability will be lowered. The terminal phenyl group concentration can be controlled by a method of controlling the molar ratio of the dihydroxy compound and carbonic acid diester starting materials, or a method of controlling the type and amount of catalyst during transesterification reaction, and the pressure or temperature during polymerization.

### (Method for producing polycarbonate resin)

The polycarbonate resin of the invention is produced by commonly known reaction means for producing a polycarbonate resin, other than the aspect of using a dihydroxy compound represented by formula (1), such as a method of reacting a carbonate precursor such as a carbonic acid diester with a dihydroxy component. The basic means employed in such production methods will now be explained in brief. The construction of the polycarbonate resin to be used in the production method of the invention may be as laid out both above and below for the polycarbonate resin of the invention.

Transesterification reaction using a carbonic acid diester as the carbonate precursor is carried out by a method of heating and stirring an aromatic dihydroxy component in a predetermined ratio with the carbonic acid diester under an inert gas atmosphere, and distilling off the alcohol or phenol that is generated. The reaction temperature will differ depending on the boiling point of the generated alcohol or phenol, but it will usually be in the range of 120 to 300°C. The reaction is run from start to completion while distilling off the alcohol or phenol generated under reduced pressure. An end terminator or antioxidant may also be added if necessary.

Carbonic acid diesters to be used for transesterification reaction include optionally substituted aryl or aralkyl esters of 6 to 12 carbon atoms. Specific examples are diphenyl carbonate, ditolyl carbonate, bis(chlorophenyl) carbonate and m-cresyl carbonate. Diphenyl carbonate is most preferable among these. The amount of diphenyl carbonate used is preferably 0.97 to 1.10 mol and more preferably 1.00 to 1.06 mol, with respect to 1 mol as the total dihydroxy compound.

A polymerization catalyst may be used to increase the polymerization rate for melt polymerization, suitable polymerization catalysts including alkali metal compounds, alkaline earth metal compounds, nitrogen-containing compounds and metal compounds.

Preferred compounds for such use include organic acid salts, inorganic salts, oxides, hydroxides, hydrides and alkoxides of alkali metals or alkaline earth metals, and quaternary ammonium hydroxides, any of which compounds may be used alone or in combinations.

Alkali metal compounds include sodium hydroxide, potassium hydroxide, cesium hydroxide, lithium hydroxide, sodium hydrogencarbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium benzoate, potassium benzoate, cesium benzoate, lithium benzoate, disodium hydrogenphosphate, dipotassium hydrogenphosphate, dilithium hydrogenphosphate, disodium phenylphosphate, disodium salts, dipotassium salts, dicesium salts and dilithium salts of bisphenol A, and sodium salts, potassium salts, cesium salts and lithium salts of phenol.

Examples of alkaline earth metal compounds include magnesium hydroxide, calcium hydroxide, strontium hydroxide, barium hydroxide, magnesium carbonate, calcium carbonate, strontium carbonate, barium carbonate, magnesium diacetate, calcium diacetate, strontium diacetate and barium diacetate.

Nitrogen-containing compounds include quaternary ammonium hydroxides with alkyl or aryl groups, such as tetramethylammonium hydroxide, tetraethylammonium hydroxide, tetrapropylammonium hydroxide, tetrabutylammonium hydroxide and trimethylbenzylammonium hydroxide. Tertiary amines such as triethylamine, dimethylbenzylamine or triphenylamine, and imidazoles such as 2-methylimidazole, 2-phenylimidazole or benzimidazole, may also be used. Other examples include bases or basic salts, such as ammonia, tetramethylammonium borohydride, tetrabutylammonium borohydride, tetrabutylammonium tetraphenylborate and tetraphenylammonium tetraphenylborate.

Examples of metal compounds include zinc aluminum compounds, germanium compounds, organic tin compounds, antimony compounds, manganese compounds, titanium compounds and zirconium compounds. These compounds may also be used alone, or in combinations of two or more.

The amount of polymerization catalyst used is preferably 0.1 µmol to 500 µmol, more preferably 0.5 µmol to 300 µmol and even more preferably 1 µmol to 100 µmol, with respect to 1 mol of the dihydroxy component.

A catalyst deactivator may also be added in a later stage of the reaction. A publicly known catalyst deactivator may be effectively used as the catalyst deactivator, with ammonium salts and phosphonium salts of sulfonic acid being preferred. Also preferred are dodecylbenzenesulfonic acid salts such as tetrabutylphosphonium dodecylbenzenesulfonate salt, and para-toluenesulfonic acid salts such as tetrabutylammonium para-toluenesulfonate salt.

Sulfonic acid esters that are preferred for use include methyl benzenesulfonate, ethyl benzenesulfonate, butyl benzenesulfonate, octyl benzenesulfonate, phenyl benzenesulfonate, methyl para-toluenesulfonate, ethyl para-toluenesulfonate, butyl para-toluenesulfonate, octyl para-toluenesulfonate and phenyl para-toluenesulfonate. Of these, it is most preferred to use tetrabutylphosphonium dodecylbenzenesulfonate salt.

Such a catalyst deactivator is used in a proportion of preferably 0.5 to 50 mol, more preferably 0.5 to 10 mol and even more preferably 0.8 to 5 mol with respect to 1 mol of catalyst, when
at least one type of polymerization catalyst selected from among alkali metal compounds and/or alkaline earth metal compounds is used.

### (Viscosity-average molecular weight)

The viscosity-average molecular weight (Mv) of the polycarbonate resin of the invention is preferably 10,000 to 50,000, more preferably 12,000 to 45,000 and even more preferably 15,000 to 40,000. If the viscosity-average molecular weight is lower than this lower limit, it may not be possible to obtain a sufficiently practical level of toughness or impact resistance. If the viscosity-average molecular weight exceeds 50,000, a high molding temperature will be required or a special molding method will be required, and consequently the method will not be generally applicable, while further increase in the melt viscosity may tend to result in higher dependence on the injection speed, and may lower the yield due to outer appearance defects.

The viscosity-average molecular weight for the polycarbonate resin of the invention was calculated as the viscosity-average molecular weight Mv by the formula shown below, based on first determining the specific viscosity (η_{SP}) calculated for a solution of 0.7 g of polycarbonate resin dissolved in 100 ml of methylene chloride at 20°C using an Ostwald viscometer, by the following formula: $Specific viscosity \left({η}_{SP}\right) = \left(t-{t}_{0}\right) / {t}_{0}$ [where t₀ is the seconds of free fall of methylene chloride and t is the seconds of free fall of the sample solution]. ${H}_{SP} / c = \left[η\right] + 0.45 \times {\left[η\right]}^{2} c \left(\left[η\right]=limiting viscosity\right)$ $\left[η\right] = 1.23 \times {10}^{- 4} {Mv}^{0.83}$ $c = 0.7$

### (Glass transition temperature)

The polycarbonate resin of the invention preferably exhibits a single glass transition temperature (Tg) in differential scanning calorimetry (DSC). The lower limit for the Tg is preferably 100°C or higher, more preferably 110°C or higher and even more preferably 120°C or higher, and the upper limit for the Tg is preferably no higher than 200°C, more preferably no higher than 180°C and even more preferably no higher than 160°C. If the glass transition temperature (Tg) is at least this lower limit the heat resistance will be sufficient, and if it is no higher than the upper limit, the molding workability will be satisfactory.

The Tg can be measured using a Model 2910 DSC by TA Instruments Japan, at a temperature-elevating rate of 20°C/min.

### (Light transmittance)

The polycarbonate resin of the invention preferably has a light transmittance of 30% or greater, more preferably 40% or greater, even more preferably 45% or greater and most preferably 50% or greater, at a wavelength of 320 nm on a molded sheet (3 mm thickness) formed from the polycarbonate resin. If the light transmittance at this wavelength is lower than the lower limit, absorption will increase and the light fastness may be impaired when exposed to sunlight ray or artificial lighting.

The polycarbonate resin of the invention preferably has a light transmittance of 55% or greater, more preferably 60% or greater, even more preferably 65% or greater and most preferably 70% or greater, at a wavelength of 350 nm on a molded sheet (3 mm thickness) formed from the polycarbonate resin. If the light transmittance at this wavelength is lower than the lower limit, absorption will increase and the light fastness may be impaired when exposed to sunlight ray or artificial lighting.

### (Weather resistance)

The polycarbonate resin of the invention has a Yellow Index (YI) value of preferably no higher than 10, more preferably no higher than 9 and most preferably no higher than 8, as measured by transmitted light according to JIS K7373, after a molded article (3 mm thickness) formed from the polycarbonate resin has been subjected to 1000 hours of irradiation treatment using a xenon lamp at a wavelength of 300 nm to 400 nm with an irradiance of 180 w/m², in an environment of 63°C, 50% relative humidity.

### (Aromatic monohydroxy compound content)

The aromatic monohydroxy compound content of the polycarbonate resin of the invention is preferably 1500 ppm by weight or lower, more preferably 1200 ppm by weight or lower, even more preferably 1000 ppm by weight or lower and most preferably 700 ppm by weight or lower. This range is preferred for satisfactory color tone and fluidity of the polycarbonate copolymer. An aromatic monohydroxy compound is a by-product during polymerization reaction. The amount of aromatic monohydroxy compound can be reduced by controlling the pressure or temperature during polymerization.

### <Components other than polycarbonate resin>

The polycarbonate resin of the invention may also contain other known functional agents such as release agents, heat stabilizers, ultraviolet absorbers, flow modifiers and antistatic agents, in ranges that do not impair the effect of the invention.

### (i) Release agent

The polycarbonate resin of the invention may be used in combination with a release agent, so long as the effect of the invention is not impaired. Examples of release agents include fatty acid esters, polyolefin-based waxes (also including polyethylene waxes or 1-alkene polymers that have been modified with functional group-containing compounds, such as acid modification), fluorinated compounds (fluorine oils such as polyfluoroalkyl ethers), paraffin waxes and beeswax. Fatty acid esters are preferred among these from the viewpoint of availability, releasability and transparency. The proportion of release agent to be added is preferably 0.001 to 2 parts by weight, more preferably 0.005 to 1 part by weight, even more preferably 0.007 to 0.5 part by weight and most preferably 0.01 to 0.3 part by weight, with respect to 100 parts by weight of the polycarbonate resin. If the content is above the lower limit of this range, an effect of improved releasability is clearly exhibited, and if it is below the upper limit, adverse effects on contamination of the die during mold are reduced.

Fatty acid esters to be used as preferred release agents will now be described in detail. These fatty acid esters are esters of aliphatic alcohols and aliphatic carboxylic acids. An aliphatic alcohol may be either a monohydric alcohol or a dihydric or greater polyhydric alcohol. The number of carbon atoms in the alcohol is preferably in the range of 3 to 32, and more preferably in the range of 5 to 30. Examples of monohydric alcohols include dodecanol, tetradecanol, hexadecanol, octadecanol, eicosanol, tetracosanol, ceryl alcohol, and triacontanol. Polyhydric alcohols include pentaerythritol, dipentaerythritol, tripentaerythritol, polyglycerols (triglycerol-hexaglycerol), ditrimethylolpropane, xylitol, sorbitol and mannitol. A polyhydric alcohol is more preferred for a fatty acid ester.

An aliphatic carboxylic acid preferably has 3 to 32 carbon atoms, and it is most preferably an aliphatic carboxylic acid of 10 to 22 carbon atoms. Examples of aliphatic carboxylic acids include saturated aliphatic carboxylic acids such as decanoic acid, undecanoic acid, dodecanoic acid, tridecanoic acid, tetradecanoic acid, pentadecanoic acid, hexadecanoic acid (palmitic acid), heptadecanoic acid, octadecanoic acid (stearic acid), nonadecanoic acid, eicosanoic acid and docosanoic acid (behenic acid), and unsaturated aliphatic carboxylic acids such as palmitoleic acid, oleic acid, linoleic acid, linolenic acid, eicosenoic acid, eicosapentaenoic acid and cetoleic acid. An aliphatic carboxylic acid is most preferably one having 14 to 20 carbon atoms. Saturated aliphatic carboxylic acids are preferred among those mentioned above. Since such aliphatic carboxylic acids are usually produced from natural fats or oils including animal fats and oils (such as beef tallow and lard) or vegetable fats and oils (such as palm oil), they are generally mixtures containing other carboxylic acid components with different numbers of carbon atoms. Production of such aliphatic carboxylic acids is therefore also from natural fats or oils, and they are in the form of mixtures containing other carboxylic acid components. The acid value of a fatty acid ester is preferably 20 or lower (and may even be essentially 0). A full ester, however, preferably includes a significant amount of free fatty acid to increase the releasability, and from this standpoint the full ester preferably has an acid value in the range of 3 to 15. The iodine value of a fatty acid ester is preferably 10 or lower (and may even be essentially 0). This property can be determined by the method of JIS K 0070.

The aforementioned fatty acid esters may be partial esters or full esters, but they are preferably partial esters from the viewpoint of more satisfactory releasability and durability, and are most preferably glycerin monoesters. A glycerin monoester has a monoester of glycerin and a fatty acid as the main component, with suitable fatty acids including saturated fatty acids such as stearic acid, palmitic acid, behenic acid, arachic acid, montanic acid and lauric acid and unsaturated fatty acids such as oleic acid, linoleic acid and sorbic acid, among which those having glycerin monoesters of stearic acid, behenic acid and palmitic acid as main components are especially preferred. Such fatty acids are synthesized from natural fatty acids, and they are mixtures, as mentioned above. The proportion of glycerin monoester in the fatty acid ester in such cases is still preferably 60 wt% or greater.

Partial esters are generally inferior to full esters from the standpoint of thermal stability. In order to increase the thermal stability of a partial ester, the partial ester has a sodium metal content of preferably less than 20 ppm, more preferably less than 5 ppm and even more preferably less than 1 ppm. A fatty acid partial ester with a sodium metal content of less than 1 ppm can be produced by first producing a fatty acid partial ester by a common method and then purifying it by molecular distillation.

Specifically, the method may be removal of the gas and low-boiling-point substances with a spray nozzle-type degasser, followed by removal of the polyhydric alcohol components such as glycerin using a falling film-type distilling apparatus under conditions with a distillation temperature of 120 to 150°C and a degree of vacuum of 0.01 to 0.03 kPa, and then using a centrifugal molecular distillation device to obtain a high-purity fatty acid partial ester as distillate under conditions with a distillation temperature of 160 to 230°C and a degree of vacuum of 0.01 to 0.2 Torr, thereby allowing the sodium metal to be removed as distillation residue. The obtained distillate may be subjected to repeated molecular distillation to further increase the purity, so that a fatty acid partial ester with an even lower sodium metal content can be obtained. It is also essential to prevent inclusion of sodium metal components from the external environment, by thoroughly washing the inside of the molecular distillation device beforehand by an appropriate method to increase the airtightness. Such fatty acid esters are available from specialist vendors (such as Riken Vitamin Co., Ltd.).

### (ii) Phosphorus-based stabilizer

The polycarbonate resin of the invention preferably further contains any of various phosphorus-based stabilizers, primarily for the purpose of increasing the thermal stability during molding. Examples of such phosphorus-based stabilizers include phosphorous acid, phosphoric acid, phosphonous acid, phosphonic acid, and their esters. Phosphorus-based stabilizers also include tertiary phosphine.

Specific examples of phosphite compounds include triphenyl phosphite, tris(nonylphenyl)phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, 2,2-methylenebis(4,6-di-*tert*-butylphenyl)octyl phosphite, tris(diethylphenyl)phosphite, tris(di-iso-propylphenyl)phosphite, tris(di-*n*-butylphenyl)phosphite, tris(2,4-di-*tert-*butylphenyl)phosphite, tris(2,6-di-*tert*-butylphenyl)phosphite, distearylpentaerythritol diphosphite, bis(2,4-di-*tert*-butylphenyl)pentaerythritol diphosphite, bis(2,6-di-*tert*-butyl-4-methylphenyl)pentaerythritol diphosphite, bis(2,6-di-*tert*-butyl-4-ethylphenyl)pentaerythritol diphosphite, phenylbisphenol A pentaerythritol diphosphite, bis(nonylphenyl)pentaerythritol diphosphite and dicyclohexylpentaerythritol diphosphite.

Other phosphite compounds to be used are those that react with dihydric phenols to form cyclic structures. Examples include 2,2'-methylenebis(4,6-di-*tert*-butylphenyl) (*2,4-di-tert-*butylphenyl)phosphite, 2,2'-methylenebis(4,6-di-*tert*-butylphenyl) (2-*tert*-butyl-4-methylphenyl)phosphite, 2,2'-methylenebis(4-methyl-6-*tert*-butylphenyl) (2-*tert*-butyl-4-methylphenyl)phosphite and 2,2'-ethylidenebis(4-methyl-6-*tert*-butylphenyl) (2-*tert*-butyl-4-methylphenyl)phosphite.

Phosphate compounds include tributyl phosphate, trimethyl phosphate, tricresyl phosphate, triphenyl phosphate, trichlorphenyl phosphate, triethyl phosphate, diphenylcresyl phosphate, diphenylmonoorthoxenyl phosphate, tributoxyethyl phosphate, dibutyl phosphate, dioctyl phosphate and diisopropyl phosphate, with triphenyl phosphate and trimethyl phosphate being preferred.

Phosphonite compounds include tetrakis(2,4-di-*tert*-butylphenyl)-4,4'-biphenylene diphosphonite, tetrakis(2,4-di-*tert*-butylphenyl)-4,3'-biphenylene diphosphonite, tetrakis(2,4-di-*tert*-butylphenyl)-3,3'-biphenylene diphosphonite, tetrakis(2,6-di-*tert*-butylphenyl)-4,4'-biphenylene diphosphonite, tetrakis(2,6-di-*tert*-butylphenyl)-4,3'-biphenylene diphosphonite, tetrakis(2,6-di-*tert*-butylphenyl)-3,3'-biphenylene diphosphonite, bis(2,4-di-*tert*-butylphenyl)-4-phenyl-phenylphosphonite, bis(2,4-di-*tert*-butylphenyl)-3-phenyl-phenylphosphonite, bis(2,6-din-butylphenyl)-3-phenyl-phenylphosphonite, bis(2,6-di-*tert*-butylphenyl)-4-phenyl-phenylphosphonite and bis(2,6-di-*tert*-butylphenyl)-3-phenyl-phenylphosphonite, with tetrakis(di-*tert*-butylphenyl)-biphenylene diphosphonite and bis(di-*tert*-butylphenyl)-phenyl-phenylphosphonite being preferred, and tetrakis(2,4-di-*tert*-butylphenyl)-biphenylene diphosphonite and bis(2,4-di-*tert*-butylphenyl)-phenyl-phenyl phosphonite being more preferred. Such phosphonite compounds are preferred since they can be used together with phosphite compounds having aryl groups by substitution of two or more alkyl groups.

Phosphonate compounds include dimethyl benzenephosphonate, diethyl benzenephosphonate and dipropyl benzenephosphonate.

Examples of tertiary phosphines include triethylphosphine, tripropylphosphine, tributylphosphine, trioctylphosphine, triamylphosphine, dimethylphenylphosphine, dibutylphenylphosphine, diphenylmethylphosphine, diphenyloctylphosphine, triphenylphosphine, tri-*p*-tolylphosphine, trinaphthylphosphine and diphenylbenzylphosphine. Triphenylphosphine is a particularly preferred tertiary phosphine.

The phosphorus-based stabilizer used may be one alone, or a mixture of two or more. Phosphite compounds or phosphonite compounds are preferred among the phosphorus-based stabilizers mentioned above. Particularly preferred are tris(2,4-di-*tert*-butylphenyl)phosphite, tetrakis(2,4-di-*tert*-butylphenyl)-4,4'-biphenylene diphosphonite and bis(2,4-di-*tert-*butylphenyl)-phenyl-phenylphosphonite. Another preferred mode is to use these in combination with a phosphate compound.

### (iii) Hindered phenol-based stabilizer (antioxidant)

The polycarbonate resin of the invention may also have a hindered phenol-based stabilizer added, primarily for the purpose of increasing the thermal stability during molding, and the thermal aging resistance. Examples of such hindered phenol-based stabilizers include α-tocopherol, butylhydroxytoluene, sinapyl alcohol, vitamin E, n-octadecyl-β-(4'-hydroxy-3',5'-di-tert-butylphenyl) propionate, 2-*tert*-butyl-6-(3'-*tert*-butyl-5'-methyl-2'-hydroxybenzyl)-4-methylphenyl acrylate, 2,6-di-*tert*-butyl-4-(N,N-dimethylaminomethyl)phenol, 3,5-di-*tert*-butyl-4-hydroxybenzyl phosphonatediethyl ester, 2,2'-methylenebis(4-methyl-6-*tert*-butylphenol), 2,2'-methylenebis(4-ethyl-6-*tert*-butylphenol), 4,4'-methylenebis(2,6-di-*tert*-butylphenol), 2,2'-methylenebis(4-methyl-6-cyclohexylphenol), 2,2'-dimethylene-bis(6-α-methyl-benzyl-*p-*cresol)2,2'-ethylidene-bis(4,6-di-*tert*-butylphenol), 2,2'-butylidene-bis(4-methyl-6-*tert*butylphenol), 4,4'-butylidenebis(3-methyl-6-*tert*-butylphenol), triethylene glycol-N-bis-3-(3-*tert-*butyl-4-hydroxy-5-methylphenyl)propionate, 1,6-hexanediolbis[3-(3,5-di-*tert*-butyl-4-hydroxyphenyl)propionate], bis[2-*tert*-butyl-4-methyl 6-(3-*tert*-butyl-5-methyl-2-hydroxybenzyl)phenyl] terephthalate, 3,9-bis{2-[3-(3-*tert*-butyl-4-hydroxy-5-methylphenyl)propionyloxyl-1,1,-dimethylethyl}-2,4,8,10-tetraoxaspiro[5,5]undecane, 4,4'-thiobis(6-*tert*-butyl-*m*-cresol), 4,4'-thiobis(3-methyl-6-*tert*-butylphenol), 2,2'-thiobis(4-methyl-6-tert-butylphenol), bis(3,5-di-*tert*-butyl-4-hydroxybenzyl)sulfide, 4,4'-di-thiobis(2,6-di-*tert*butylphenol), 4,4'-tri-thiobis(2,6-di-*tert*-butylphenol), 2,2-thiodiethylenebis-[3-(3,5-di-*tert*-butyl-4-hydroxyphenyl)propionate], 2,4-bis(n-octylthio)-6-(4-hydroxy-3',5'-di-*tert*-butylanilino)-1,3,5-triazine, N,N'-hexamethylenebis-(3,5-di-*tert*-butyl-4-hydroxyhydrocinnamide), N,N'-bis[3-(3,5-di-*tert*-butyl-4-hydroxyphenyl)propionyllhydrazine, 1,1,3-tris(2-methyl-4-hydroxy-5-*tert-*butylphenyl)butane, 1,3,5-trimethyl-2,4,6-tris(3,5-di-*tert*-butyl-4-hydroxybenzyl)benzene, tris(3,5-di-*tert*-butyl-4-hydroxyphenyl)isocyanurate, tris(3,5-di-*tert*-butyl-4-hydroxybenzyl)isocyanurate, 1,3,5-tris(4-*tert*-butyl-3-hydroxy-2,6-dimethylbenzyl)isocyanurate, 1,3,5-tris-2[3(3,5-di-*tert*-butyl-4-hydroxyphenyl)propionyloxy]ethyl isocyanurate and tetrakis[methylene-3-(3',5'-di-*tert*-butyl-4-hydroxyphenyl)propionate]methane. These are all readily available compounds. The aforementioned hindered phenol-based antioxidants may be used alone, or in combinations of two or more.

The amount of the (ii) phosphorus-based stabilizer and/or (iii) hindered phenol-based antioxidant is preferably 0.0001 to 1 part by weight, more preferably 0.001 to 0.5 part by weight and even more preferably 0.005 to 0.1 part by weight, with respect to 100 parts by weight of the polycarbonate resin. If the stabilizer is above the lower limit of this range it will be possible to obtain a satisfactory stabilizing effect, and if it is below the upper limit, there will be a lower tendency for the physical properties of the material to be reduced or for the die to become contaminated during molding.

The polycarbonate resin of the invention may also employ other antioxidants as appropriate, in addition to the aforementioned hindered phenol-based antioxidant. Examples of such antioxidants include pentaerythritoltetrakis(3-mercaptopropionate), pentaerythritoltetrakis(3-lauryl thiopropionate) and glycerol-3-stearyl thiopropionate. The amount of other antioxidant to be used is preferably 0.001 to 0.05 part by weight with respect to 100 parts by weight of the polycarbonate copolymer.

### (iv) Ultraviolet absorber

The polycarbonate resin to be used for the invention may contain an ultraviolet absorber. Specific examples of benzophenone-based ultraviolet absorbers for the invention include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydridebenzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-*n*-dodecyloxybenzophenone and 2-hydroxy-4-methoxy-2'-carboxybenzophenone.

Specific examples of benzotriazole-based ultraviolet absorbers include 2-(2-hydroxy-5-methylphenyl)benzotriazole, 2-(2-hydroxy-5-*tert*-octylphenyl)benzotriazole, 2-(2-hydroxy-3,5-dicumylphenyl)phenylbenzotriazole, 2-(2-hydroxy-3-*tert*-butyl-5-methylphenyl)-5-chlorobenzotriazole, 2,2'-methylenebis[4-(1,1,3,3-tetramethylbutyl)-6-(2H-benzotriazol-2-yl)phenol], 2-(2-hydroxy-3,5-di-*tert*-butylphenyl)benzotriazole, 2-(2-hydroxy-3,5-di-*tert-*butylphenyl)-5-chlorobenzotriazole, 2-(2-hydroxy-3,5-di-*tert*-amylphenyl)benzotriazole, 2-(2-hydroxy-5-*tert*-octylphenyl)benzotriazole, 2-(2-hydroxy-5-*tert*-butylphenyl)benzotriazole, 2-(2-hydroxy-4-octoxyphenyl)benzotriazole, 2,2'-methylenebis(4-cumyl-6-benzotriazolephenyl), 2,2'-*p*-phenylenebis(1,3-benzoxazin-4-one) and 2-[2-hydroxy-3-(3,4,5,6-tetrahydrophthalimidemethyl)-5-methylphenyl]benzotriazole, and polymers having a 2-hydroxyphenyl-2H-benzotriazole skeleton, such as copolymers of 2-(2'-hydroxy-5-methacryloxyethylphenyl)-2H-benzotriazole with vinyl-based monomers that are copolymerizable with the monomer, or copolymers of 2-(2'-hydroxy-5-acryloxyethylphenyl)-2H-benzotriazole with vinyl-based monomers that are copolymerizable with the monomer.

Specific examples of hydroxyphenyltriazine-based ultraviolet absorbers include 2-(4,6-diphenyl-1,3,5-triazin-2-yl)-5-hexyloxyphenol, 2-(4,6-diphenyl-1,3,5-triazin-2-yl)-5-methyloxyphenol, 2-(4,6-diphenyl-1,3,5-triazin-2-yl)-5-ethyloxyphenol, 2-(4,6-diphenyl-1,3,5-triazin-2-yl)-5-propyloxyphenol and 2-(4,6-diphenyl-1,3,5-triazin-2-yl)-5-butyloxyphenol. Other examples are compounds wherein the phenyl group in the aforementioned compounds is a 2,4-dimethylphenyl group, such as 2-(4,6-bis(2,4-dimethylphenyl)-1,3,5-triazin-2-yl)-5-hexyloxyphenol.

Specific examples of ultraviolet absorbers that are cyclic imino ester-based include 2,2'-*p*-phenylenebis(3,1-benzoxazin-4-one), 2,2'-(4,4'-diphenylene)bis(3,1-benzoxazin-4-one) and 2,2'-(2,6-naphthalene)bis(3,1-benzoxazin-4-one).

Specific examples of ultraviolet absorbers that are cyano acrylate-based include 1,3-bis-[(2'-cyano-3',3'-diphenylacryloyl)oxy]-2,2-bis[(2-cyano-3,3-diphenylacryloyl)oxy]methyl)propane and 1,3-bis-[(2-cyano-3,3-diphenylacryloyl)oxylbenzene.

If the ultraviolet absorber has a monomer compound structure that is capable of radical polymerization, then it may be a polymer-type ultraviolet absorber obtained by copolymerization of an ultraviolet absorbing monomer and/or a light-stable monomer with a hindered amine structure, with a monomer such as an alkyl (meth)acrylate. Suitable examples of ultraviolet absorbing monomers include compounds comprising a benzotriazole skeleton, benzophenone skeleton, triazine skeleton, cyclic imino ester skeleton or cyano acrylate skeleton in an ester substituent of a (meth)acrylic acid ester.

From the viewpoint of ultraviolet absorption performance, it is preferably benzotriazole-based or hydroxyphenyltriazine-based, while from the viewpoint of heat resistance and color tone, it is preferably cyclic imino ester-based or cyano acrylate-based. The ultraviolet absorber may be used alone or as a mixture of two or more.

The ultraviolet absorber content is preferably 0.01 to 2 parts by weight, more preferably 0.03 to 2 parts by weight, even more preferably 0.04 to 1 part by weight and most preferably 0.05 to 0.5 part by weight, with respect to 100 parts by weight of the polycarbonate resin.

### (v) Flow modifier

The polycarbonate resin of the invention may include a flow modifier, in a range that does not interfere with the effect of the invention. Examples of suitable flow modifiers include styrene-based oligomers, polycarbonate oligomers (highly-branched, hyper-branched or cyclic oligomers), polyalkylene terephthalate oligomers (highly-branched, hyper-branched or cyclic oligomers), highly-branched and hyper-branched aliphatic polyester oligomers, terpene resins and polycaprolactone. The flow modifier is used at preferably 0.1 to 30 parts by weight, more preferably 1 to 20 parts by weight and even more preferably 2 to 15 parts by weight, with respect to 100 parts by weight of the polycarbonate resin. Polycaprolactone is particularly preferred, at a composition ratio of most preferably 2 to 7 parts by weight with respect to 100 parts by weight of the polycarbonate resin. The molecular weight of the polycaprolactone is 1,000 to 70,000, preferably 1,500 to 40,000, more preferably 2,000 to 30,000 and even more preferably 2,500 to 15,000, as the number-average molecular weight.

### (vi) Antistatic agent

The polycarbonate resin of the invention may have an antistatic agent added, primarily for the purpose of improving the antistatic property. The antistatic agent used may be a phosphonium sulfonate salt, phosphorous acid ester or caprolactone-based copolymer, with phosphonium sulfonate salts being preferred. Specific examples of phosphonium sulfonate salts include tetrabutylphosphonium dodecylsulfonate, tetrabutylphosphonium dodecylbenzenesulfonate, tributyloctylphosphonium dodecylbenzenesulfonate, tetraoctylphosphonium dodecylbenzenesulfonate, tetraethylphosphonium octadecylbenzenesulfonate, tributylmethylphosphonium dibutylbenzenesulfonate, triphenylphosphonium dibutylnaphthylsulfonate and trioctylmethylphosphonium diisopropylnaphthylsulfonate. Of these, tetrabutylphosphonium dodecylbenzenesulfonate is preferred from the viewpoint of compatibility with polycarbonates and ready availability. The amount of antistatic agent added is preferably 0.1 to 5.0 parts by weight, more preferably 0.2 to 3.0 parts by weight, even more preferably 0.3 to 2.0 parts by weight and most preferably 0.5 to 1.8 parts by weight, with respect to 100 parts by weight of the polycarbonate copolymer. An antistatic effect will be obtained at 0.1 part by weight or greater, while an amount of 5.0 parts by weight or lower will result in excellent transparency and mechanical strength, and fewer outer appearance defects and lack of formation of silver or peeling on molded article surfaces.

The polycarbonate resin of the invention may also contain various other additives, such as blueing agents, fluorescent dyes, flame retardants and dyes or pigments. These may be added as appropriate in ranges that do not interfere with the effect of the invention.

A blueing agent is preferably included at 0.05 to 3.0 ppm (weight proportion) in the polycarbonate resin. Typical blueing agents are MACROLEX Violet B and MACROLEX Blue RR by Bayer Ltd., and Polysynthren Blue RLS by Clariant Japan.

Examples of fluorescent dyes (including fluorescent whitening agents) include coumarin-based fluorescent dyes, benzopyran-based fluorescent dyes, perylene-based fluorescent dyes, anthraquinone-based fluorescent dyes, thioindigo-based fluorescent dyes, xanthene-based fluorescent dyes, xanthone-based fluorescent dyes, thioxanthene-based fluorescent dyes, thioxanthone-based fluorescent dyes, thiazine-based fluorescent dyes and diaminostilbene-based fluorescent dyes. The content of fluorescent dyes (including fluorescent whitening agents) is preferably 0.0001 to 0.1 part by weight with respect to 100 parts by weight of the polycarbonate resin.

Examples of flame retardants include metal sulfonate-based flame retardants, halogen-containing compound-based flame retardants, phosphorus-containing compound-based flame retardants and silicon-containing compound-based flame retardants. Metal sulfonate-based flame retardants are preferred among these. The content of the flame retardant is usually preferred to be 0.01 to 1 part by weight and more preferably in the range of 0.05 to 1 part by weight, with respect to 100 parts by weight of the polycarbonate resin.

The polycarbonate resin of the invention may also contain components other than those mentioned above, as appropriate, so long as the effect of the invention is not significantly impeded. Other components may be resins other than the polycarbonate resin. Such other components may be added alone, or two or more may be added in any desired combinations and proportions. Examples of such other resins include thermoplastic polyester resins such as polyethylene terephthalate resin (PET resin), polytrimethylene terephthalate (PTT resin) and polybutylene terephthalate resin (PBT resin); styrene-based resins such as polystyrene resin (PS resin), high-impact polystyrene resin (HIPS), acrylonitrile-styrene copolymer (AS resin), acrylonitrile-butadiene-styrene copolymer (ABS resin), acrylonitrile-styrene-acrylic rubber copolymer (ASA resin) and acrylonitrile-ethylenepropylene-based rubber-styrene copolymer (AES resin); polyolefin resins such as polyethylene resin (PE resin), polypropylene resin (PP resin), cyclic cycloolefin resin (COP resin) and cyclic cycloolefin copolymer (COP) resin; polyamide resin (PA resin); polyimide resin (PI resin); polyetherimide resin (PEI resin); polyurethane resin (PU resin); polyphenylene ether resin (PPE resin); polyphenylene sulfide resin (PPS resin); polysulfone resin (PSU resin); and polymethacrylate resin (PMMA resin).

The method of adding such additives to the polycarbonate resin of the invention is not particularly restricted, and any publicly known method may be used. The most commonly employed method is one in which the polycarbonate resin and additives are pre-mixed and then loaded into an extruder for melt kneading, and the extruded thread is cooled and cut with a pelletizer to produce pellets of the molding material.

The extruder used in this method may be a single-screw extruder or a twin-screw extruder, but a twin-screw extruder is preferred from the viewpoint of productivity and kneadability. A typical example of a twin-screw extruder is a ZSK (trade name of Werner & Pfleiderer). Specific examples of the same type are TEX (trade name of Japan Steel Works, Ltd.), TEM (trade name of Toshiba Machine Co., Ltd.) and KTX (trade name of Kobe Steel, Ltd.). The extruder used may be one having a vent allowing deaeration of moisture in the starting materials or volatilized gas generated from the melt kneading resin. A vacuum pump is preferably provided to efficiently discharge the generated moisture or volatilization gas through the vent out of the extruder. A screen to remove the extraneous material contaminating the extrusion starting material is provided in a zone prior to the extruder die section, allowing the extraneous material to be removed from the resin composition. The screen may be a wire mesh, screen changer or sintered metal plate (disc filter or the like).

The additives may be provided to the extruder independently, but preferably they are pre-mixed with the resin material, as mentioned above. Examples of means to be used for pre-mixing include a Nauta mixer, V-type blender, Henschel mixer, mechanochemical apparatus or extrusion mixer. A more preferred method is a method in which a portion of the starting resin and the additives are mixed with a high-speed stirrer such as a Henschel mixer to prepare a master agent, and then the master agent is mixed with the remaining amount of resin material using a non-high-speed stirrer such as a Nauta mixer.

The polycarbonate resin composition that has been extruded by the extruder is either directly cut and pelletized, or used to form a strand which is cut and pelletized with a pelletizer. When it is necessary to reduce the effects of external dust, it is preferred to clean the atmosphere surrounding the extruder. Any of the various previously proposed methods for optical disc polycarbonate resins may be suitably used for production of the pellets, to narrow the shape distribution of the pellets, to further reduce miscutting, to further reduce fine powder generated during shipping or transport, and to reduce air bubbles (vacuum air bubbles) generated in the strands and pellets. Miscutting can be reduced by means such as temperature control of the thread during cutting with the pelletizer, blasting of ionic wind during cutting, optimization of the rake angle of the pelletizer or appropriate addition of a release agent, or by a method of filtering a mixture of the cut pellets and water to separate the pellets and water from the miscuts. An example of a measurement method is disclosed in Japanese Unexamined Patent Publication No. 2003-200421, for example. Such a method will allow high cycling during molding and reduction in the proportion of silver or other defects that are generated.

The amount of miscutting of the molding material (pellets) is preferably 10 ppm or less and more preferably 5 ppm or less. The "miscutting" referred to here is granular powder that is smaller than pellets of a prescribed size passing through a JIS standard sieve with a mesh opening of 1.0 mm. The pellet shapes may be common shapes such as circular columnar, rectangular columnar or spherical, and more preferably circular columnar (including elliptic cylindrical), with circular columnar diameters of preferably 1.5 to 4 mm and more preferably 2 to 3.5 mm. For elliptical cylinders, the ratio of the short diameters to long diameters is preferably 60% or greater and more preferably 65% or greater. The lengths of circular columns are preferably 2 to 4 mm and more preferably 2.5 to 3.5 mm.

### <Molded polycarbonate resin>

The method of producing a molded article composed of the polycarbonate resin of the invention is not particularly restricted, and any molding method commonly used for polycarbonate resins may be employed. Examples of methods that may be mentioned include injection molding, ultra high-speed injection molding, injection compression molding, two-color molding, gas-assisted or other blow molding methods, molding methods using heat insulated dies, molding methods using rapid heating dies, foam molding (including supercritical fluids), insert molding, IMC (in-molding coated) molding methods, extrusion molding, sheet forming, hot molding, rotational molding, laminated molding and press molding. A molding method using a hot runner system may also be employed.

The polycarbonate resin of the invention can be used to obtain molded sheets or films by methods such as melt extrusion or solution casting. Specifically, the specific melt extrusion method may employ a system with metered supply of a polycarbonate copolymer or resin composition to an extruder, for hot melting, extrusion of the molten resin from the tip section of a T-die to form a sheet on a mirror surface roll, take-up by a plurality of rolls while cooling and, upon solidification, either cutting to an appropriate size or winding up. A specific method of solution casting may be one employing a system in which a solution of a polycarbonate copolymer or resin composition dissolved in methylene chloride (5%-40% concentration) is cast from a T-die onto a stainless steel sheet with a mirror polished surface, and passed through a stepwise temperature-controlled oven while separating off the sheet and removing the solvent, and finally cooling and winding it.

The polycarbonate resin of the invention may also be molded into a layered body. The method of forming a layered body may be any method, but most preferably it is thermocompression bonding or co-extrusion. Any method may be used for thermocompression bonding, and for example, it is preferred to use a method of thermocompression bonding of a polycarbonate resin or resin composition sheet with a laminating machine or pressing machine, or a method of thermocompression bonding immediately after extrusion, with the most advantageous method from an industrial standpoint being a method of continuous thermocompression bonding into a sheet immediately after extrusion.

### EXAMPLES

The invention will now be described in greater detail by examples, with the understanding that the invention is not limited to these examples. Measurement of the properties in the Examples and Comparative Examples was carried out as follows.

### <Evaluation methods>

### (1) Boric acid content

The boric acid was quantified using the following apparatuses and conditions. For quantitation, an aqueous boric acid solution of predetermined concentration was used to draw a calibration curve. N.D. in the tables represents a value of < 1 ppm.
GC-MS analyzer: GC6890N, MSD5975B by Agilent Technologies
Column: 19091S-433 HP-5 MS by Agilent Technologies
Measuring conditions: Flow rate of 1 mL/min, column oven at 50 to 310°C, measuring time of 60 minutes.
Silylation method: Dissolution of 10 mg of sample in acetonitrile, addition of 0.1 mL pyridine and 0.1 mL BSTFA (silylating agent), filtration with filter, injection of 1 µL into apparatus.

### (2) Tertiary amine amount

The triethylamine was quantified using the following apparatuses and conditions. For quantitation, an aqueous triethylamine solution of predetermined concentration was used to draw a calibration curve. N.D. in the tables represents a value of < 1 ppm.
Ion chromatography apparatus: ICS-2000 by Dionex Corp.
Cation measuring column:: IonPac CS17 (30°C) by Dionex Corp.
Eluent: 5 mmol/L methanesulfonic acid
Flow rate: 1.0 mL/min
Detector: Electric conductivity (using autosuppressor)
Sample introduction: 100 µL

### (3) cis-trans ratio

The ¹H-NMR spectrum was measured at ordinary temperature using a JNM-AL400 by JEOL Corp., and the *cis*/*trans* isomer ratio was calculated based on the signal intensity ratio.
Sample: 50 mg
Solvent: Heavy DMSO, 0.6 mL
Number of scans: 512

### (4) Polymer compositional ratio and terminal phenyl group concentration

A JNM-AL400 (resonance frequency: 400 MHz) by JEOL Corp. was used to measure the ¹ H-NMR spectrum at ordinary temperature, and the compositional ratio of each structural unit in the polymer was calculated from the signal intensity ratio based on structural units derived from each dihydroxy compound. The terminal phenyl group concentration was determined by ¹H-NMR measurement with 1,1,2,2-tetrabromoethane as the internal standard, based on the signal intensity ratio of the internal standard and terminal phenyl groups.
Polymer amount: 40 mg
Solvent: Heavy chloroform, 0.6 mL
Number of scans: 256

### (5) Viscosity-average molecular weight

The viscosity-average molecular weight of the polycarbonate resin was measured by the following method. The specific viscosity (ηₛₚ) at 20°C was measured, for a solution of 0.7 g of polycarbonate resin pellets dissolved in 100 ml of methylene chloride. The viscosity-average molecular weight Mv was calculated by the following formula. ${η}_{sp} / c = \left[η\right] + 0.45 \times {\left[η\right]}^{2} c$ $\left[η\right] = 1.23 \times {10}^{- 4} {Mv}^{0.83}$
ηₛₚ: Specific viscosity
η: Limiting viscosity
c: Constant (= 0.7)
Mv: Viscosity-average molecular weight

### (6) Glass transition temperature

Using a DSC-2910 Thermal Analysis System by TA Instruments and 8 mg of polycarbonate resin, the glass transition temperature (Tg) was measured according to JIS K7121, under conditions with a nitrogen atmosphere (nitrogen flow rate: 40 ml/min) and a temperature-elevating rate of 20°C/min.

### (7) Initial color tone

Polycarbonate resin pellets were dried at 100°C for 12 hours and supplied to an injection molding machine (EC100NII-2Y by Toshiba Machine Co., Ltd.), and a molded sheet (100 mm length × 100 mm width × 3 mm thickness) was formed with a resin temperature of 260°C and a die temperature of 80°C. The initial color tone (YI₀) of the molded sheet was measured according to JIS K6735, using an NDH-2000 by Nippon Denshoku Industries Co., Ltd. (C light source, viewing angle: 2°).

### (8) Spectral light transmittance (320 nm, 350 nm)

The light transmittance of the molded sheet (thickness: 3 mm) was measured using an ultraviolet and visible spectrophotometer (U4100 by Hitachi High-Technologies Corp.).

### (9) Weather resistance test

Using a Super Xenon Weather Meter by Suga Test Instruments Co., Ltd., the molded sheet was allowed to stand for 1000 hours under conditions of 63°C, 50% relative humidity, the color tone (YI₁) of the molded sheet was measured according to JIS K7373 using an SE-2000 by Nippon Denshoku Industries Co., Ltd. (C light source, viewing angle: 2°), and the color difference (ΔYI = YI₁ - YI₀) was calculated.

### (10) Monohydroxy compound content

After dissolving 1.25 g of resin composition in 7 mL of methylene chloride, acetone was added to a total amount of 25 ml, and reprecipitation treatment was carried out. The treatment solution was then filtered with a 0.2 µm disposable filter, and quantified by liquid chromatography.

### (11) Flexural modulus

Using a J-75E3 Injection Molding Machine by Japan Steel Works, Ltd., with a bending test piece shaped under conditions with a cylinder temperature of 260°C and a die temperature of 80°C, the flexural modulus was measured at 23°C according to ISO 178.

### Experiment A: Examining effect of boric acid content

The following starting materials were used.

TMCB-A1: Purchased from Wako Pure Chemical Industries, Ltd. (product name: 2,2,4,4-tetramethyl-1,3-cyclobutanediol). The *cis* isomer ratio was 60% and the boric acid content was 250 ppm by weight.

TMCB-A2: After dissolving TMCB-A1 in toluene, the solution was stirred using ion-exchanged water at room temperature, separating off the washing water when the pH of the washing water reached 7 to 8. After completely distilling off the toluene from the toluene solution to obtain a white powder, it was vacuum dried at 80°C for 48 hours. The *cis* isomer ratio was 60% and the boric acid content was 120 ppm by weight.

TMCB-A3: After dissolving TMCB-A1 in toluene, the solution was stirred using ion-exchanged water at 40°C, separating off the washing water when the pH of the washing water reached 7 to 8. After completely distilling off the toluene from the toluene solution to obtain a white powder, it was vacuum dried at 80°C for 48 hours. The *cis* isomer ratio was 60% and the boric acid content was 80 ppm by weight.

TMCB-A4: After dissolving TMCB-A1 in toluene, the solution was stirred using ion-exchanged water at 60°C, separating off the washing water when the pH of the washing water reached 7 to 8. After completely distilling off the toluene from the toluene solution to obtain a white powder, it was vacuum dried at 80°C for 48 hours. The *cis* isomer ratio was 60% and the boric acid content was 20 ppm by weight.

### [Example A1]

Using 490 parts of TMCB-A4 and 728 parts of diphenyl carbonate (DPC) as starting materials, and 5.9 × 10⁻² parts of lithium acetate as a catalyst, they were heated to 180°C under a nitrogen atmosphere to melting. The mixture was then reduced in pressure to 13.4 kPa over a period of 30 minutes. The temperature was then increased to 250°C at a rate of 60°C/hr and that temperature was maintained for 10 minutes, after which the pressure was reduced to below 133 Pa over a period of 1 hour. Reaction was conducted for a total of 6 hours while stirring, after which the mixture was discharged from the bottom of the reaction tank under nitrogen pressurization and cut with a pelletizer while cooling in a water tank, to obtain pellets. The pellets were evaluated, giving the evaluation results shown in Table 1.

### [Example A2]

The same procedure was carried out and evaluation was conducted in the same manner as Example A1, except that TMCB-A3 was used as the starting material. The results are shown in Table 1.

### [Comparative Example A1]

The same procedure was carried out and evaluation was conducted in the same manner as Example A1, except that TMCB-A2 was used as the starting material. The results are shown in Table 1.

### [Example A3]

The same procedure was carried out and evaluation was conducted in the same manner as Example A1, except that 441 parts of TMCB-A4 and 106 parts of 1,1-bis(4-hydroxyphenyl)-3,3,5-trimethylcyclohexane (hereunder abbreviated as TMC, product of Honshu Chemical Industry Co., Ltd.) were used as starting materials. The results are shown in Table 2.

### [Example A4]

The same procedure was carried out and evaluation was conducted in the same manner as Example A1, except that 245 parts of TMCB-A3 and 527 parts of TMC were used as starting materials. The results are shown in Table 2.

### [Example A5]

The same procedure was carried out and evaluation was conducted in the same manner as Example A1, except that 49 parts of TMCB-A3 and 697 parts of 2,2-bis(4-hydroxyphenyl)propane (hereunder abbreviated as BPA, product of Mitsui Chemicals, Inc.) were used as starting materials. The results are shown in Table 2.

### [Example A6]

The same procedure was carried out and evaluation was conducted in the same manner as Example A1, except that 392 parts of TMCB-A4 and 209 parts of 6,6'-dihydroxy-3,3,3',3'-tetramethylspirobiindane (hereunder abbreviated as SBI) were used as starting materials. The results are shown in Table 2.

### [Comparative Example A2]

The same procedure was carried out and evaluation was conducted in the same manner as Example A3, except that TMCB-A1 was used as the starting material. The results are shown in Table 2.

### [Example A7]

The same procedure was carried out and evaluation was conducted in the same manner as Example A1, except that 245 parts of TMCB-A4 and 248 parts of isosorbide (hereunder abbreviated as ISS, product of Roquette Freres SA) were used as starting materials. The results are shown in Table 3.

### [Example A8]

The same procedure was carried out and evaluation was conducted in the same manner as Example A1, except that 147 parts of TMCB-A4 and 347 parts of ISS were used as starting materials. The results are shown in Table 3.

### [Example A9]

The same procedure was carried out and evaluation was conducted in the same manner as Example A1, except that 441 parts of TMCB-A3 and 49 parts of 1,4-cyclohexanedimethanol (hereunder abbreviated as CHDM, product of Tokyo Kasei Kogyo Co., Ltd.) were used as starting materials. The results are shown in Table 3.

### [Comparative Example A3]

The same procedure was carried out and evaluation was conducted in the same manner as Example A7, except that TMCB-A2 was used as the starting material. The results are shown in Table 3.

### [Example A10]

The same procedure was carried out and evaluation was conducted in the same manner as Example A1, except that 451 parts of TMCB-A4 and 32 parts of 1,6-hexanediol (hereunder abbreviated as HD, product of Tokyo Kasei Kogyo Co., Ltd.) were used as starting materials. The results are shown in Table 4.

### [Example A 11]

The same procedure was carried out and evaluation was conducted in the same manner as Example A1, except that 465 parts of TMCB-A4 and 34 parts of 1,12-dodecanediol (hereunder abbreviated as DDD, product of Tokyo Kasei Kogyo Co., Ltd.) were used as starting materials. The results are shown in Table 4.

### [Example A12]

The same procedure was carried out and evaluation was conducted in the same manner as Example A1, except that 470 parts of TMCB-A3 and 22 parts of 1,9-nonanediol (hereunder abbreviated as ND, product of Tokyo Kasei Kogyo Co., Ltd.) were used as starting materials. The results are shown in Table 4.

### [Comparative Example A4]

The same procedure was carried out and evaluation was conducted in the same manner as Example A10, except that TMCB-A1 was used as the starting material. The results are shown in Table 4.

### [Example A13]

The same procedure was carried out and evaluation was conducted in the same manner as Example A1, except that 343 parts of TMCB-A3, 263 parts of TMC and 27 parts of ND were used as starting materials. The results are shown in Table 5.

### [Example A14]

The same procedure was carried out and evaluation was conducted in the same manner as Example A1, except that 172 parts of TMCB-A4, 298 parts of ISS and 27 parts of ND were used as starting materials. The results are shown in Table 5.

### [Example A15]

The same procedure was carried out and evaluation was conducted in the same manner as Example A1, except that 147 parts of TMCB-A3, 248 parts of ISS and 98 parts of CHDM were used as starting materials. The results are shown in Table 5.

### [Comparative Example A5]

The same procedure was carried out and evaluation was conducted in the same manner as Example A13, except that TMCB-A2 was used as the starting material. The results are shown in Table 5.

**Table 1**

| Property | | Units | Example | | Comparative Example |
|---|---|---|---|---|---|
| | | | A1 | A2 | A1 |
| Polymer compositional ratio | TMCB | mol% | 100 | 100 | 100 |
| TMCB quality | *cis* ratio | mol% | 60 | 60 | 60 |
| | Boric acid content | ppm | 20 | 80 | 120 |
| Polymer properties | Viscosity-average molecular weight (Mv) | × 1000 | 20.1 | 16.9 | 20.6 |
| | Glass transition temperature (Tg) | °C | 115 | 131 | 121 |
| Polymer quality | Phenol content | ppm | 410 | 370 | 540 |
| | Terminal phenyl group concentration | µeq/g | 81 | 125 | 75 |
| Weather resistance | Spectral light transmittance at 320 nm | % | 56 | 51 | 18 |
| | Spectral light transmittance at 350 nm | % | 72 | 65 | 40 |
| | Initial color tone (YI₀) | - | 1.8 | 2.1 | 4.5 |
| | Color tone (YI₁) after 1000 hr | - | 5.4 | 6.8 | 15.2 |
| | Color difference (ΔYI) | - | 3.6 | 4.7 | 10.7 |
| Mechanical strength | Flexural modulus | MPa | 1,850 | 1,940 | 1,820 |

**Table 2**

| Property | | | Units | Example | | | | Comparative Example |
|---|---|---|---|---|---|---|---|---|
| | | | | A3 | A4 | A5 | A6 | A2 |
| Polymer compositional ratio | TMCB | | mol% | 90 | 50 | 10 | 80 | 90 |
| | Aromatic dihydroxy compound | BPTMC | mol% | 10 | 50 | 0 | 0 | 10 |
| | | SBI | mol% | 0 | 0 | 0 | 20 | 0 |
| | | BPA | mol% | 0 | 0 | 90 | 0 | 0 |
| TMCB quality | *cis* ratio | | % | 60 | 60 | 60 | 60 | 60 |
| | Boric acid content | | ppm | 20 | 80 | 80 | 20 | 250 |
| Polymer properties | Viscosity-average molecular weight (Mv) | | × 1000 | 18.5 | 21.6 | 25.5 | 22.1 | 18.3 |
| | Glass transition temperature (Tg) | | °C | 121 | 182 | 149 | 130 | 118 |
| Polymer quality | Phenol content | | ppm | 510 | 410 | 430 | 520 | 540 |
| | Terminal phenyl group concentration | | µeq/g | 84 | 70 | 58 | 68 | 78 |
| Weather resistance | Spectral light transmittance at 320 nm | | % | 60 | 54 | 45 | 58 | 12 |
| | Spectral light transmittance at 350 nm | | % | 75 | 63 | 55 | 69 | 35 |
| | Initial color tone (YI₀) | | - | 2.1 | 2.2 | 2.5 | 2.7 | 7.8 |
| | Color tone (YI₁) after 1000 hr | | - | 6.2 | 7.7 | 9.6 | 8.1 | 19.4 |
| | Color difference (ΔYI) | | - | 4.1 | 5.5 | 7.1 | 5.4 | 11.6 |
| Mechanical strength | Flexural modulus | | MPa | 2,040 | 2,260 | 2,370 | 2,050 | 2,010 |

**Table 3**

| Property | | | Units | Example | | | Comparative Example |
|---|---|---|---|---|---|---|---|
| | | | | A7 | A8 | A9 | A3 |
| Polymer compositional ratio | TMCB | | mol% | 50 | 30 | 90 | 50 |
| | Alicyclic dihydroxy compound | CHDM | | 0 | 0 | 10 | 0 |
| | | ISS | | 50 | 70 | 0 | 50 |
| TMCB quality | *cis* ratio | | mol% | 60 | 60 | 60 | 60 |
| | Boric acid content | | ppm | 20 | 20 | 80 | 120 |
| Polymer properties | Viscosity-average molecular weight (Mv) | | × 1000 | 20.5 | 23.4 | 34.5 | 21.3 |
| | Glass transition temperature (Tg) | | °C | 145 | 153 | 106 | 146 |
| Polymer quality | Phenol content | | ppm | 380 | 330 | 390 | 370 |
| | Terminal phenyl group concentration | | µeq/g | 77 | 68 | 62 | 70 |
| Weather resistance | Spectral light transmittance at 320 nm | | % | 60 | 60 | 59 | 13 |
| | Spectral light transmittance at 350 nm | | % | 72 | 72 | 69 | 36 |
| | Initial color tone (YI₀) | | - | 2.1 | 2.4 | 2.5 | 6.2 |
| | Color tone (YI₁) after 1000 hr | | - | 4.5 | 4.8 | 4.9 | 16.1 |
| | Color difference (ΔYI) | | - | 2.4 | 2.4 | 2.4 | 9.9 |
| Mechanical strength | Flexural modulus | | MPa | 2,540 | 2,760 | 1,770 | 2,540 |

**Table 4**

| Property | | | Units | Example | | | Comparative Example |
|---|---|---|---|---|---|---|---|
| | | | | A10 | A11 | A12 | A4 |
| Polymer compositional ratio | TMCB | | mol% | 92 | 95 | 96 | 95 |
| | Aliphatic dihydroxy compound | HD | | 8 | 0 | 0 | 0 |
| | | DDD | | 0 | 5 | 0 | 5 |
| | | ND | | 0 | 0 | 4 | 0 |
| TMCB quality | *cis* ratio | | mol% | 60 | 60 | 60 | 60 |
| | Boric acid content | | ppm | 20 | 20 | 80 | 250 |
| Polymer properties | Viscosity-average molecular weight (Mv) | | × 1000 | 24.6 | 25.2 | 16.4 | 24.8 |
| | Glass transition temperature (Tg) | | °C | 105 | 105 | 100 | 103 |
| Polymer quality | Phenol content | | ppm | 410 | 440 | 450 | 440 |
| | Terminal phenyl group concentration | | µeq/g | 69 | 65 | 82 | 73 |
| Weather resistance | Spectral light transmittance at 320 nm | | % | 60 | 58 | 57 | 15 |
| | Spectral light transmittance at 350 nm | | % | 74 | 72 | 71 | 38 |
| | Initial color tone (YI₀) | | - | 2.3 | 2.5 | 2.5 | 5.2 |
| | Color tone (YI₁) after 1000 hr | | - | 6.8 | 7.1 | 8.1 | 17.3 |
| | Color difference (ΔYI) | | - | 4.5 | 4.6 | 5.6 | 12.1 |
| Mechanical strength | Flexural modulus | | MPa | 1,720 | 1,810 | 1,850 | 1,810 |

**Table 5**

| Property | | Units | Example | | | Comparative Example |
|---|---|---|---|---|---|---|
| | | | A13 | A14 | A15 | A5 |
| Polymer compositional ratio | TMCB | mol% | 70 | 35 | 30 | 70 |
| | TMC | | 25 | 0 | 0 | 25 |
| | ISS | | 0 | 60 | 50 | 5 |
| | CHDM | | 0 | 0 | 20 | 0 |
| | ND | | 5 | 5 | 0 | 5 |
| TMCB quality | *cis* ratio | mol% | 60 | 60 | 60 | 60 |
| | Boric acid content | ppm | 80 | 20 | 80 | 120 |
| Polymer properties | Viscosity-average molecular weight (Mv) | × 1000 | 19.8 | 25.8 | 15.4 | 20.5 |
| | Glass transition temperature (Tg) | °C | 141 | 124 | 124 | 141 |
| Polymer quality | Phenol content | ppm | 510 | 360 | 380 | 510 |
| | Terminal phenyl group concentration | µeq/g | 76 | 55 | 112 | 70 |
| Weather resistance | Spectral light transmittance at 320 nm | % | 60 | 65 | 63 | 15 |
| | Spectral light transmittance at 350 nm | % | 75 | 79 | 76 | 35 |
| | Initial color tone (YI₀) | - | 2.4 | 1.9 | 2.8 | 6.4 |
| | Color tone (YI₁) after 1000 hr | - | 8.1 | 6.7 | 7.5 | 18.8 |
| | Color difference (ΔYI) | - | 5.7 | 4.8 | 4.7 | 12.4 |
| Mechanical strength | Flexural modulus | MPa | 1,920 | 2,850 | 2,340 | 1,910 |

### <Experiment B: Examining effect of tertiary amine content>

The following starting materials were used.

TMCB-B1: Purchased from Wako Pure Chemical Industries, Ltd. (compound name: 2,2,4,4-tetramethyl-1,3-cyclobutanediol). The *cis* isomer ratio was 60% and the triethylamine content was 1350 ppm by weight.

TMCB-B2: After dissolving TMCB-B1 in toluene, it was washed with a 1% hydrochloric acid solution and subsequently washed again with ion-exchanged water, and the toluene was completely distilled off when the pH of the washing water reached 7 to 8. The obtained white powder was vacuum dried at 80°C for 48 hours. The *cis* isomer ratio was 60% and the triethylamine content was 900 ppm by weight.

TMCB-B3: After washing TMCB-B2 with hydrochloric acid acidity by the same procedure described above, the toluene was completely distilled off. The obtained white powder was vacuum dried at 80°C for 48 hours. The *cis* isomer ratio was 60% and the triethylamine content was 350 ppm by weight.

TMCB-B4: After dissolving TMCB-B3 in toluene, it was washed with a 1% hydrochloric acid solution and subsequently washed again with purified water, and when the pH of the washing water reached 7 to 8, the toluene was completely distilled off and recrystallization and purification were carried out. After standing at room temperature for 24 hours, the deposited crystals were filtered and the obtained white powder was vacuum dried at 80°C for 48 hours. The *cis* isomer ratio was 60%, and no triethylamine content was detected.

TMCB-B5: Purchased from Tokyo Kasei Kogyo Co., Ltd. (compound name: 2,2,4,4-tetramethyl-1,3-cyclobutanediol). The *cis* isomer ratio was 45% and the triethylamine content was 1650 ppm by weight.

TMCB-B6: After dissolving TMCB-B5 in toluene, it was washed with a 1% hydrochloric acid solution and subsequently washed again with purified water, and when the pH of the washing water reached 7 to 8, the toluene was completely distilled off and recrystallization and purification were carried out. After standing at room temperature for 24 hours, the deposited crystals were filtered and the obtained white powder was vacuum dried at 80°C for 48 hours. The *cis* isomer ratio was 45%, and no triethylamine content was detected.

### [Example B1]

Using 490 parts of TMCB-B4 and 728 parts of diphenyl carbonate (DPC) as starting materials, and 5.9 × 10⁻² parts of lithium acetate as a catalyst, they were heated to 180°C under a nitrogen atmosphere to melting. The mixture was then reduced in pressure to 13.4 kPa over a period of 30 minutes. The temperature was then increased to 250°C at a rate of 60°C/hr and that temperature was maintained for 10 minutes, after which the pressure was reduced to below 133 Pa over a period of 1 hour. Reaction was conducted for a total of 6 hours while stirring, after which the mixture was discharged from the bottom of the reaction tank under nitrogen pressurization and cut with a pelletizer while cooling in a water tank, to obtain pellets. The pellets were evaluated, giving the evaluation results shown in Table 6.

### [Example B2]

The same procedure was carried out and evaluation was conducted in the same manner as Example B1, except that TMCB-B3 was used as the starting material. The results are shown in Table 6.

### [Example B3]

The same procedure was carried out and evaluation was conducted in the same manner as Example B1, except that TMCB-B2 was used as the starting material. The results are shown in Table 6.

### [Comparative Example B1]

The same procedure was carried out and evaluation was conducted in the same manner as Example B1, except that TMCB-B1 was used as the starting material. The results are shown in Table 6.

### [Example 4]

The same procedure was carried out and evaluation was conducted in the same manner as Example B1, except that 441 parts of TMCB-B3 and 106 parts of 1,1-bis(4-hydroxyphenyl)-3,3,5-trimethylcyclohexane (hereunder abbreviated as TMC, product of Honshu Chemical Industry Co., Ltd.) as starting materials. The results are shown in Table 7.

### [Example B5]

The same procedure was carried out and evaluation was conducted in the same manner as Example B4, except that TMCB-B6 was used as the starting material. The results are shown in Table 7.

### [Example B6]

The same procedure was carried out and evaluation was conducted in the same manner as Example B1, except that 245 parts of TMCB-B2 and 527 parts of TMC were used as starting materials. The results are shown in Table 7.

### [Example B7]

The same procedure was carried out and evaluation was conducted in the same manner as Example B1, except that 49 parts of TMCB-B3 and 697 parts of 2,2-bis(4-hydroxyphenyl)propane (hereunder abbreviated as BPA, product of Mitsui Chemicals, Inc.) were used as starting materials. The results are shown in Table 7.

### [Example B8]

The same procedure was carried out and evaluation was conducted in the same manner as Example B1, except that 392 parts of TMCB-B3 and 209 parts of 6,6'-dihydroxy-3,3,3',3'-tetramethylspirobiindane (hereunder abbreviated as SBI) were used as starting materials. The results are shown in Table 7.

### [Comparative Example B2]

The same procedure was carried out and evaluation was conducted in the same manner as Example B4, except that TMCB-B5 was used as the starting material. The results are shown in Table 7.

### [Example B9]

The same procedure was carried out and evaluation was conducted in the same manner as Example B1, except that 245 parts of TMCB-B3 and 248 parts of isosorbide (hereunder abbreviated as ISS, product of Roquette Freres SA) were used as starting materials. The results are shown in Table 8.

### [Example B10]

The same procedure was carried out and evaluation was conducted in the same manner as Example B1, except that 147 parts of TMCB-B2 and 347 parts of ISS were used as starting materials. The results are shown in Table 8.

### [Example B 11]

The same procedure was carried out and evaluation was conducted in the same manner as Example B1, except that 441 parts of TMCB-B4 and 49 parts of 1,4-cyclohexanedimethanol (hereunder abbreviated as CHDM, product of Tokyo Kasei Kogyo Co., Ltd.) were used as starting materials. The results are shown in Table 8.

### [Comparative Example B3]

The same procedure was carried out and evaluation was conducted in the same manner as Example B9, except that TMCB-B5 was used as the starting material. The results are shown in Table 8.

### [Example B12]

The same procedure was carried out and evaluation was conducted in the same manner as Example B1, except that 451 parts of TMCB-B3 and 32 parts of 1,6-hexanediol (hereunder abbreviated as HD, product of Tokyo Kasei Kogyo Co., Ltd.) were used as starting materials. The results are shown in Table 9.

### [Example B13]

The same procedure was carried out and evaluation was conducted in the same manner as Example B1, except that 465 parts of TMCB-B2 and 34 parts of 1,12-dodecanediol (hereunder abbreviated as DDD, product of Tokyo Kasei Kogyo Co., Ltd.) were used as starting materials. The results are shown in Table 9.

### [Example B14]

The same procedure was carried out and evaluation was conducted in the same manner as Example B1, except that 470 parts of TMCB-B4 and 22 parts of 1,9-nonanediol (hereunder abbreviated as ND, product of Tokyo Kasei Kogyo Co., Ltd.) were used as starting materials. The results are shown in Table 9.

### [Comparative Example B4]

The same procedure was carried out and evaluation was conducted in the same manner as Example B13, except that TMCB-B5 was used as the starting material. The results are shown in Table 9.

### [Example B15]

The same procedure was carried out and evaluation was conducted in the same manner as Example B1, except that 343 parts of TMCB-B3, 263 parts of TMC and 27 parts of ND were used as starting materials. The results are shown in Table 10.

### [Example B16]

The same procedure was carried out and evaluation was conducted in the same manner as Example B1, except that 172 parts of TMCB-B2, 298 parts of ISS and 27 parts of ND were used as starting materials. The results are shown in Table 10.

### [Example B17]

The same procedure was carried out and evaluation was conducted in the same manner as Example B1, except that 147 parts of TMCB-B4, 248 parts of ISS and 98 parts of CHDM were used as starting materials. The results are shown in Table 10.

### [Comparative Example B5]

The same procedure was carried out and evaluation was conducted in the same manner as Example B15, except that TMCB-B1 was used as the starting material. The results are shown in Table 10.

**Table 6**

| Property | | Units | Example | | | Comparative Example |
|---|---|---|---|---|---|---|
| | | | B1 | B2 | B3 | B1 |
| Polymer compositional ratio | TMCB | mol% | 100 | 100 | 100 | 100 |
| TMCB quality | *cis* ratio | mol% | 60 | 60 | 60 | 60 |
| | TEA content | ppm | N.D. | 350 | 900 | 1,350 |
| Polymer properties | Viscosity-average molecular weight (Mv) | × 1000 | 20.1 | 16.9 | 42.3 | 20.6 |
| | Glass transition temperature (Tg) | °C | 113 | 131 | 121 | 128 |
| Polymer quality | Phenol content | ppm | 450 | 370 | 540 | 450 |
| | Terminal phenyl group concentration | µeq/g | 84 | 125 | 55 | 75 |
| Weather resistance | Spectral light transmittance at 320 nm | % | 58 | 51 | 37 | 13 |
| | Spectral light transmittance at 350 nm | % | 74 | 65 | 59 | 37 |
| | Initial color tone (YI₀) | - | 1.8 | 2.1 | 2.8 | 4.1 |
| | Color tone (YI₁) after 1000 hr | - | 5.4 | 6.8 | 8.8 | 14.7 |
| | Color difference (ΔYI) | - | 3.6 | 4.7 | 6.0 | 10.6 |
| Mechanical strength | Flexural modulus | MPa | 1,850 | 1,940 | 1,720 | 1,880 |

**Table 7**

| Property | | | Units | Example | | | | | Comparative Example |
|---|---|---|---|---|---|---|---|---|---|
| | | | | B4 | B5 | B6 | B7 | B8 | B2 |
| Polymer compositional ratio | TMCB | | mol% | 90 | 90 | 50 | 10 | 80 | 90 |
| | Aromatic dihydroxy compound | BPTMC | mol% | 10 | 10 | 50 | 0 | 0 | 10 |
| | | SBI | mol% | 0 | 0 | 0 | 0 | 20 | 0 |
| | | BPA | mol% | 0 | 0 | 0 | 90 | 0 | 0 |
| TMCB quality | *cis* ratio | | % | 60 | 45 | 60 | 60 | 60 | 45 |
| | TEA content | | ppm | 350 | N.D. | 900 | 350 | 350 | 1,650 |
| Polymer properties | Viscosity-average molecular weight (Mv) | | × 1000 | 18.2 | 18.5 | 20.5 | 24.8 | 22.5 | 18.1 |
| | Glass transition temperature (Tg) | | °C | 119 | 121 | 178 | 146 | 131 | 122 |
| Polymer quality | Phenol content | | ppm | 540 | 570 | 150 | 410 | 520 | 540 |
| | Terminal phenyl group concentration | | µeq/g | 75 | 84 | 70 | 62 | 71 | 75 |
| Weather resistance | Spectral light transmittance at 320 nm | | % | 55 | 63 | 52 | 45 | 61 | 27 |
| | Spectral light transmittance at 350 nm | | % | 68 | 79 | 61 | 53 | 67 | 8 |
| | Initial color tone (YI₀) | | - | 2.1 | 2.2 | 2.1 | 1.8 | 2.4 | 4.6 |
| | Color tone (YI₁) after 1000 hr | | - | 5.8 | 6.0 | 7.5 | 9.5 | 9.4 | 18.9 |
| | Color difference (ΔYI) | | - | 3.7 | 3.8 | 5.4 | 7.7 | 7.0 | 14.3 |
| Mechanical strength | Flexural modulus | | MPa | 2,040 | 2,030 | 2,280 | 2,340 | 2,080 | 2,010 |

**Table 8**

| Property | | | Units | Example | | | Comparative Example |
|---|---|---|---|---|---|---|---|
| | | | | B9 | B10 | B11 | B3 |
| Polymer compositional ratio | TMCB | | mol% | 50 | 30 | 90 | 50 |
| | Alicyclic dihydroxy compound | CHDM | | 0 | 0 | 10 | 0 |
| | | ISS | | 50 | 70 | 0 | 50 |
| TMCB quality | *cis* ratio | | mol% | 60 | 60 | 60 | 45 |
| | TEA content | | ppm | 350 | 900 | N.D. | 1,650 |
| Polymer properties | Viscosity-average molecular weight (Mv) | | × 1000 | 20.2 | 22.4 | 32.6 | 21.5 |
| | Glass transition temperature (Tg) | | °C | 144 | 150 | 104 | 146 |
| Polymer quality | Phenol content | | ppm | 360 | 350 | 440 | 260 |
| | Terminal phenyl group concentration | | µeq/g | 75 | 70 | 65 | 70 |
| Weather resistance | Spectral light transmittance at 320 nm | | % | 62 | 60 | 59 | 13 |
| | Spectral light transmittance at 350 nm | | % | 71 | 68 | 65 | 36 |
| | Initial color tone (YI₀) | | - | 1.9 | 1.9 | 2.3 | 5.8 |
| | Color tone (YI₁) after 1000 hr | | - | 4.2 | 4.2 | 4.5 | 15.9 |
| | Color difference (ΔYI) | | - | 2.3 | 2.3 | 2.2 | 10.1 |
| Mechanical strength | Flexural modulus | | MPa | 2570 | 2740 | 1940 | 2540 |

**Table 9**

| Property | | | Units | Example | | | Comparative Example |
|---|---|---|---|---|---|---|---|
| | | | | B12 | B13 | B14 | B4 |
| Polymer compositional ratio | TMCB | | mol% | 92 | 95 | 96 | 95 |
| | Aliphatic dihydroxy compound | HD | | 8 | 0 | 0 | 0 |
| | | DDD | | 0 | 5 | 0 | 5 |
| | | ND | | 0 | 0 | 4 | 0 |
| TMCB quality | *cis* ratio | | mol% | 60 | 60 | 60 | 45 |
| | TEA content | | ppm | 350 | 900 | N.D. | 1,650 |
| Polymer properties | Viscosity-average molecular weight (Mv) | | × 1000 | 19.8 | 25.2 | 16.8 | 24.8 |
| | Glass transition temperature (Tg) | | °C | 103 | 105 | 102 | 103 |
| Polymer quality | Phenol content | | ppm | 450 | 460 | 450 | 440 |
| | Terminal phenyl group concentration | | µeq/g | 78 | 72 | 80 | 72 |
| Weather resistance | Spectral light transmittance at 320 nm | | % | 59 | 55 | 57 | 11 |
| | Spectral light transmittance at 350 nm | | % | 72 | 70 | 71 | 36 |
| | Initial color tone (YI₀) | | - | 2.1 | 2.2 | 2.1 | 4.8 |
| | Color tone (YI₁) after 1000 hr | | - | 6.1 | 7.1 | 6.8 | 15.3 |
| | Color difference (ΔYI) | | - | 4.0 | 4.9 | 4.7 | 10.5 |
| Mechanical strength | Flexural modulus | | MPa | 1,840 | 1,870 | 1,850 | 1,840 |

**Table 10**

| Property | | Units | Example | | | Comparative Example |
|---|---|---|---|---|---|---|
| | | | B15 | B16 | B17 | B5 |
| Polymer compositional ratio | TMCB | mol% | 70 | 35 | 30 | 70 |
| | TMC | | 25 | 0 | 0 | 25 |
| | ISS | | 0 | 60 | 50 | 5 |
| | CHDM | | 0 | 0 | 20 | 0 |
| | ND | | 5 | 5 | 0 | 5 |
| TMCB quality | *cis* ratio | mol% | 60 | 60 | 60 | 60 |
| | TEA content | ppm | 350 | 900 | N.D. | 1,350 |
| Polymer properties | Viscosity-average molecular weight (Mv) | × 1000 | 20.2 | 25.9 | 17.5 | 20.3 |
| | Glass transition temperature (Tg) | °C | 140 | 122 | 124 | 141 |
| Polymer quality | Phenol content | ppm | 540 | 330 | 380 | 560 |
| | Terminal phenyl group concentration | µeq/g | 74 | 45 | 110 | 72 |
| Weather resistance | Spectral light transmittance at 320 nm | % | 61 | 64 | 63 | 15 |
| | Spectral light transmittance at 350 nm | % | 73 | 78 | 76 | 35 |
| | Initial color tone (YI₀) | - | 2.1 | 1.9 | 1.9 | 5.2 |
| | Color tone (YI₁) after 1000 hr | - | 8.1 | 6.8 | 6.8 | 17.2 |
| | Color difference (ΔYI) | - | 6.0 | 4.9 | 4.9 | 12.0 |
| Mechanical strength | Flexural modulus | MPa | 1,900 | 2,820 | 2,360 | 1,910 |

### INDUSTRIAL APPLICABILITY

The polycarbonate resin of the invention has excellent heat resistance, practical mechanical strength, high transparency and initial color tone, and reduced yellowing with prolonged use, and it is therefore useful as a material for a variety of molded articles.

## Claims

1. A polycarbonate resin that includes a structural unit derived from a dihydroxy compound represented by the following formula (1), having a boric acid content of 100 ppm by weight or lower and/or a tertiary amine content of 1000 ppm by weight or lower, and that also has a terminal phenyl group derived from a carbonic acid diester represented by the following formula (2), wherein the terminal phenyl group concentration is 30 µeq/g or greater, 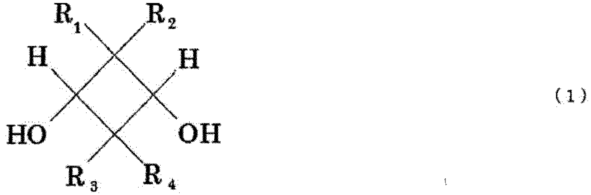 wherein R₁, R₂, R₃ and R₄ each independently represent a hydrogen atom, an alkyl group of 1 to 10 carbon atoms, an alkoxy group of 1 to 10 carbon atoms, a cycloalkyl group of 3 to 20 carbon atoms, a cycloalkoxy group of 6 to 20 carbon atoms, an aryl group of 6 to 10 carbon atoms, an aralkyl group of 7 to 20 carbon atoms, an aryloxy group of 6 to 10 carbon atoms, an aralkyloxy group of 7 to 20 carbon atoms or a halogen atom,.the cyclobutane ring represents a *cis*/*trans* isomer mixture, a *cis* isomer alone or a *trans* isomer alone, 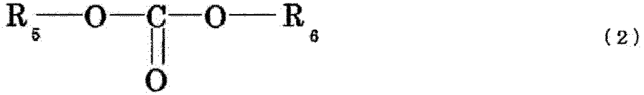 wherein R₅ and R₆ each independently represent a substituted or unsubstituted aromatic group.

2. The polycarbonate resin according to claim 1, wherein the dihydroxy compound represented by formula (1) is composed of a *cis*/*trans* isomer mixture.

3. The polycarbonate resin according to claim 1 or 2, wherein the dihydroxy compound represented by formula (1) is composed of a *cis*/*trans* isomer mixture, and the *cis* isomer ratio is 30 to 90%.

4. The polycarbonate resin according to any one of claims 1 to 3, wherein the boric acid content of the dihydroxy compound represented by formula (1) is 0.1 ppm by weight to 80 ppm by weight.

5. The polycarbonate resin according to any one of claims 1 to 4, wherein the tertiary amine content of the dihydroxy compound represented by formula (1) is 0.1 ppm by weight to 500 ppm by weight.

6. The polycarbonate resin according to claim 5, wherein the tertiary amine is triethylamine.

7. The polycarbonate resin according to any one of claims 1 to 6, wherein the dihydroxy compound represented by formula (1) is 2,2,4,4-tetramethyl-1,3-cyclobutanediol.

8. The polycarbonate resin according to any one of claims 1 to 7, which includes a structural unit derived from at least one compound selected from the group consisting of aliphatic dihydroxy compounds, alicyclic dihydroxy compounds and aromatic dihydroxy compounds.

9. The polycarbonate resin according to claim 8, wherein the molar ratio (A/B) of the structural unit (A) derived from the dihydroxy compound represented by formula (1) and the structural unit (B) derived from at least one compound selected from the group consisting of aliphatic dihydroxy compounds, alicyclic dihydroxy compounds and aromatic dihydroxy compounds is 10/90 to 90/10.

10. The polycarbonate resin according to claim 8 or 9, wherein the aliphatic dihydroxy compound is at least one compound selected from the group consisting of compounds of the following formula (3),
HO-⁅Cₘ H₂ₘ⁆-OH (3)
wherein m represents an integer of 2 to 12.

11. The polycarbonate resin according to claim 8 or 9, wherein the alicyclic dihydroxy compound is at least one compound selected from the group consisting of cyclohexanedimethanol, tricyclodecanedimethanol, adamantanediol, pentacyclopentadecanedimethanol, 3,9-bis(2-hydroxy-1,1 -dimethylethyl)-2,4,8,10-tetraoxaspiro[5.5]undecane and isosorbide.

12. The polycarbonate resin according to claim 8 or 9, wherein the aromatic dihydroxy compound is at least one compound selected from the group consisting of compounds of the following formula (4), 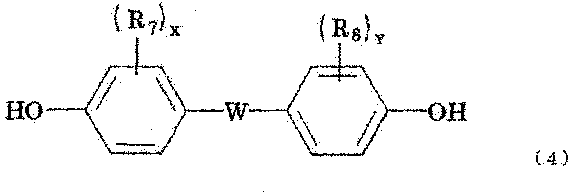 wherein W represents at least one divalent organic residue selected from the group consisting of the following formulas (5) to (8), a single bond or any bonding group of the following formula (9), X and Y each independently represent 0 or an integer of 1 to 4, and R₇ and R₈ each independently represent a halogen atom or an organic residue selected from the group consisting of alkyl groups of 1 to 10 carbon atoms, alkoxy groups of 1 to 10 carbon atoms, cycloalkyl groups of 6 to 20 carbon atoms, cycloalkoxy groups of 6 to 20 carbon atoms, aryl groups of 6 to 10 carbon atoms, aralkyl groups of 7 to 20 carbon atoms, aryloxy groups of 6 to 10 carbon atoms and aralkyloxy groups of 7 to 20 carbon atoms, 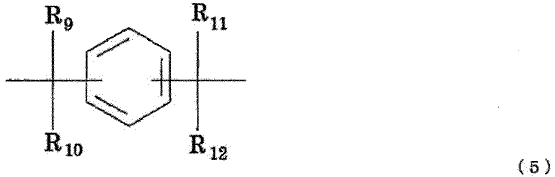 wherein R₉, R₁₀, R₁₁ and R₁₂ each independently represent a hydrogen atom, a halogen atom or an alkyl group of 1 to 3 carbon atoms, 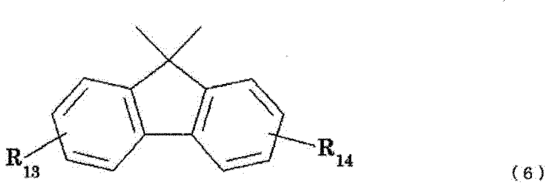 wherein R₁₃ and R₁₄ each independently represent a hydrogen atom, a halogen atom or an alkyl group of 1 to 3 carbon atoms, 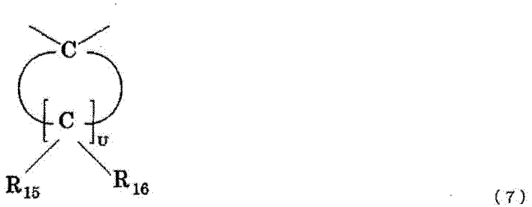 wherein U represents an integer of 4 to 11, and the multiple R₁₅ and R₁₆ groups are each independently a hydrogen atom, a halogen atom, or a group selected from among alkyl groups of 1 to 3 carbon atoms, 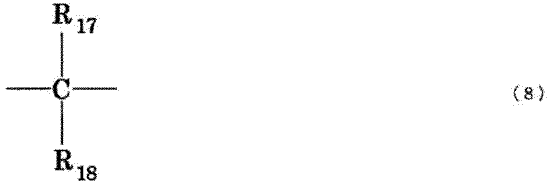 wherein R₁₇ and R₁₈ each independently represent a hydrogen atom, a halogen atom, or a group selected from among hydrocarbon groups of 1 to 10 carbon atoms,

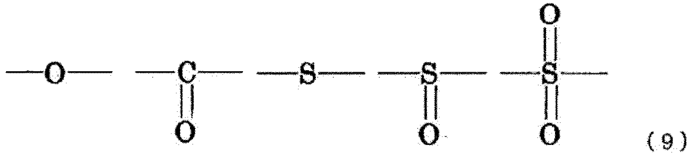

13. The polycarbonate resin according to any one of claims 1 to 12, wherein the aromatic monohydroxy compound content is 1500 ppm by weight or lower.

14. A polycarbonate resin molded article obtained by molding a polycarbonate resin according to any one of claims 1 to 13.

15. A method for producing a polycarbonate resin according to claim 1, wherein a dihydroxy compound represented by formula (1) having a boric acid content of 100 ppm by weight or lower and/or a tertiary amine content of 1000 ppm by weight or lower, and a carbonic acid diester represented by formula (2), are subjected to transesterification reaction in the presence of an alkali metal catalyst and/or an alkaline earth metal catalyst.
